# EUROPEAN PATENT APPLICATION

(11) **EP 4 581 916 A1**
(43) Date of publication of application: **09.07.2025**
(21) Application number: 24219685.5
(22) Date of filing: 13.12.2024
(51) Int. Cl.: A01B 69/04, G05D 1/00, G05D 1/43, G05D 1/646, G05D 1/648

(54) **WORK ASSISTANCE DEVICE, WORKING MACHINE, AND WORK ASSISTING METHOD**

(30) Priority: 21.12.2023 JP 2023216165
(71) Applicant: KUBOTA CORPORATION, Osaka-shi, Osaka 556-8601 (JP)
(72) Inventor: KUSAKARI, Yuta, Sakai-shi, Osaka, 5900908 (JP); MORIMOTO, Takanori, Sakai-shi, Osaka, 5900908 (JP); WATANABE, Sho, Sakai-shi, Osaka, 5900908 (JP); MORISHITA, Takafumi, Sakai-shi, Osaka, 5900908 (JP)
(74) Representative: Müller-Boré & Partner Patentanwälte PartG mbB

(57) **Abstract**

A work assistance device (30) includes an input interface (32) to receive input of user-specified information, and a first controller (31) to acquire the information received by the input interface (32) and information relating to an agricultural field (H) in which a working machine (1), which is operable to automatically travel, performs work. The first controller (31) defines, based on the acquired information, guide information including (i) position information of a guide point (IP) for the working machine (1) to be guided from an automatic travel route (R1) to be automatically traveled by the working machine (1) in the agricultural field (H) to a predetermined position, and (ii) orientation information indicating an orientation of the working machine (1) at the guide point (IP), and outputs the guide information to the working machine (1).

## Description

### BACKGROUND OF THE INVENTION

### Field of the Invention

The present invention relates to work assistance devices to assist in work performed by working machines such as tractors, working machines, and work assisting methods.

### Description of the Related Art

A working vehicle disclosed in Japanese Unexamined Patent Application Publication No. 2022-11621 (Patent Literature 1) includes a traveling vehicle body, a control unit causing the traveling vehicle body to autonomously travel along an autonomous working route set in an agricultural field, and a remote manual operator transmitting a command to the control unit. While receiving a travel command from the remote manual operator, the control unit remotely causes the traveling vehicle body to travel along a remote operation travel route preliminarily set from an end stop position of the autonomous working route toward an edge of the agricultural field.

### SUMMARY OF THE INVENTION

With the working vehicle in Patent Literature 1, through operation of a user on the remote manual operator, the traveling vehicle body moves to the edge of the agricultural field, so that the distance for the user to walk to the stopping working vehicle to get thereinto can be shortened.

Unfortunately, the remote operation travel route is preliminarily recorded in a recorder of the control unit, and, depending on the status of the working vehicle, the direction of the working vehicle stopping after traveling along the remote operation travel route may not be favorable for the agricultural field in some cases.

One or more embodiments of the present invention were made in view of such issues of related art, and an object thereof is to provide a work assistance device, a working machine, and a work assisting method each of which makes it possible to move a working machine from an automatic travel route to be automatically traveled by the working machine to an appropriate position and direct the working machine in an appropriate orientation.

A work assistance device according to an aspect of the present invention includes an input interface to receive input of user-specified information, and a first controller configured or programmed to acquire the information received by the input interface and information relating to an agricultural field in which a working machine performs work, the working machine being operable to perform automatic travel, wherein the first controller is configured or programmed to define, based on the acquired information, guide information including (i) position information of a guide point for the working machine to be guided from an automatic travel route to a predetermined position, the automatic travel route being a route to be automatically traveled by the working machine in the agricultural field and (ii) orientation information indicating an orientation of the working machine at the guide point, and output the guide information to the working machine.

The position information of the guide point may be information based on which the working machine is to be guided to a position different from points on the automatic travel route.

The input interface may be operable to receive input of a user-specified position of the guide point.

The input interface may be operable to receive input of, as the guide point, a user-specified position that is within the agricultural field in which the working machine performs work and that is in a vicinity of a contour of the agricultural field.

The first controller may be configured or programmed to acquire an off-limits area of the agricultural field, the off-limits area being an area where the working machine is prohibited from traveling , and, when the input interface is to receive the user-specified position of the guide point, cause the input interface to display whether the input interface is allowed to receive the user-specified position of the guide point based on the off-limits area.

The first controller may be configured or programmed to acquire an off-limits area of the agricultural field, the off-limits are being an area where the working machine is prohibited from traveling, and when the guide point received by the input interface is located in the off-limits area, perform a redefining process for the guide point.

The first controller may be configured or programmed to acquire an off-limits area of the agricultural field, the off-limits area being an area where the working machine is prohibited from traveling, acquire a vehicle body position of the working machine performing the automatic travel in the agricultural field, and if each of one or more routes connecting the vehicle body position and the guide point passes through the off-limits area, perform a redefining process for the guide point.

The first controller may be configured or programmed to acquire a vehicle body position of the working machine performing the automatic travel in the agricultural field, and if an abnormality occurs in the working machine, perform a redefining process for the guide point.

The first controller may be configured or programmed to, in performing the redefining process, command the input interface to receive re-input of a user-specified guide point and perform the redefining process based on the guide point thus received by the input interface.

The first controller may be configured or programmed to, in performing the redefining process, define a new guide point instead of the guide point received by the input interface, the new guide point being a position that is within the agricultural field in which the working machine performs work and that is near a contour of the agricultural field, a travel distance and/or a travel time from the vehicle body position at a time of occurrence of the abnormality to the position being the shortest, and redefine guide information based on the new guide point.

The input interface may be operable to receive input of a user-specified portion of a contour of the agricultural field in which the working machine performs work. The first controller may be configured or programmed to acquire a vehicle body position of the working machine performing the automatic travel in the agricultural field and, upon determining that the working machine has completed work in the agricultural field, define, as the guide point, a position close to the portion of the contour received by the input interface, a travel distance and/or a travel time from the vehicle body position at a time of completion of work by the working machine to the position being the shortest.

The input interface may be operable to receive input of a user-specified portion of a contour of the agricultural field in which the working machine performs work. The first controller may be configured or programmed to acquire a vehicle body position of the working machine performing the automatic travel in the agricultural field, and, if an abnormality occurs in the working machine, define, as the guide point, a position close to the portion of the contour received by the input interface, a travel distance and/or a travel time from the vehicle body position at a time of occurrence of the abnormality to the position being the shortest.

The first controller may be configured or programmed to acquire a vehicle body position of the working machine performing the automatic travel in the agricultural field, generate a guide route to be automatically traveled by the working machine based on the vehicle body position and the position information and the orientation information about the guide point, and define the guide route as the guide information.

The first controller may be configured or programmed to generate, based on the vehicle body position and the position information and the orientation information about the guide point, at least one of (i) a first guide route generated such that a travel distance from the vehicle body position to the guide point is as short as possible or (ii) a second guide route generated such that a travel time from the vehicle body position to the guide point is as short as possible, and define, as the guide information, one of the first guide route and the second guide route that is selected via the input interface.

The input interface may be operable to receive input of a user-specified orientation of the working machine at the guide point relative to an edge of the agricultural field. The first controller may be configured or programmed to define the orientation information based on the orientation received by the input interface.

The first controller may be configured or programmed to define the orientation information such that an entrance/exit of the working machine faces toward an edge of the agricultural field.

The first controller may be configured or programmed to define, based on a position of a working device attached to a vehicle body of the working machine in an offset manner along a width direction relative to the vehicle body, the orientation information such that an opposite side of the vehicle body from a side to which the working device is offset relative to the vehicle body faces toward an edge of the agricultural field.

The first controller may be configured or programmed to define the orientation information such that a direction of travel of the working machine is oriented toward an entrance/exit of the agricultural field.

The first controller may be configured or programmed to define the orientation information such that a supply portion is directed toward an edge of the agricultural field, the supply portion being provided on the working machine to receive a supply from an external source.

A working machine according to an aspect of the present invention includes the work assistance device, and a second controller configured or programmed to control the automatic travel, wherein the first controller is configured or programmed to output the guide information to the second controller.

A work assisting method according to an aspect of the present invention is a work assisting method for a working machine which includes a work assistance device including an input interface to receive input of user-specified information and a first controller configured or programmed to acquire the information received by the input interface and information relating to an agricultural field in which work is performed, and a second controller configured or programmed to control automatic travel, the work assisting method including causing the first controller to acquire information, causing the first controller to define, based on the acquired information, guide information including (i) position information of a guide point for the working machine to be guided from an automatic travel route to a predetermined position, the automatic travel route being a route to be automatically traveled by the working machine in the agricultural field, and (ii) orientation information indicating an orientation of the working machine at the guide point, and causing the first controller to output the guide information to the second controller.

With the above-described work assistance device, working machine, and work assisting method, the working machine can be moved from the automatic travel route for automatic travel to an appropriate position in an appropriate orientation.

The above and other elements, features, steps, characteristics and advantages of the present invention will become more apparent from the following detailed description of the example embodiments with reference to the attached drawings.

### BRIEF DESCRIPTION OF THE DRAWINGS

A more complete appreciation of example embodiments of the present invention and many of the attendant advantages thereof will be readily obtained as the same becomes better understood by reference to the following detailed description when considered in connection with the accompanying drawings described below.
FIG. 1 is a block diagram of an aiding system for a working machine.
FIG. 2 is a side view of the working machine.
FIG. 3A is a first diagram illustrating a plan view of the working machine.
FIG. 3B is a second diagram illustrating a plan view of the working machine.
FIG. 4 is a diagram describing automatic travel of the working machine.
FIG. 5A is a flowchart illustrating example automatic travel route generation processing.
FIG. 5B is a flowchart illustrating a procedure of definition and the like of guide information at a work assistance device.
FIG. 6 is a diagram illustrating an example automatic travel route generated on an agricultural field map.
FIG. 7 is a diagram illustrating an automatic travel route and a guide point.
FIG. 8 is a diagram illustrating an example first setting screen.
FIG. 9A is a first diagram describing a direction of the working machine located at the guide point relative to an edge of an agricultural field.
FIG. 9B is a second diagram describing the direction of the working machine located at the guide point relative to the edge of the agricultural field.
FIG. 9C is a third diagram describing the direction of the working machine located at the guide point relative to the edge of the agricultural field.
FIG. 9D is a fourth diagram describing the direction of the working machine located at the guide point relative to the edge of the agricultural field.
FIG. 10 is a diagram illustrating example guide routes generated on the agricultural field map.
FIG. 11 is a diagram illustrating an example confirmation screen.
FIG. 12 is a diagram illustrating an example second setting screen.
FIG. 13A is a first diagram describing definition of orientation information at the guide point according to a second embodiment.
FIG. 13B is a second diagram describing definition of the orientation information at the guide point according to the second embodiment.
FIG. 13C is a third diagram describing definition of the orientation information at the guide point according to the second embodiment.
FIG. 13D is a fourth diagram describing definition of the orientation information at the guide point according to the second embodiment.
FIG. 13E is a fifth diagram describing definition of the orientation information at the guide point according to the second embodiment.
FIG. 14A is a first diagram describing definition of position information of the guide point according to a third embodiment.
FIG. 14B is a second diagram describing definition of the position information of the guide point according to the third embodiment.
FIG. 15 is a diagram illustrating an example third setting screen.
FIG. 16 is a diagram illustrating an example fourth setting screen.

### DESCRIPTION OF THE EXAMPLE EMBODIMENTS

Example embodiments will now be described with reference to the accompanying drawings, wherein like reference numerals designate corresponding or identical elements throughout the various drawings. The drawings are to be viewed in an orientation in which the reference numerals are viewed correctly.

Embodiments of the present invention will be described below with reference to the drawings.

### First Embodiment

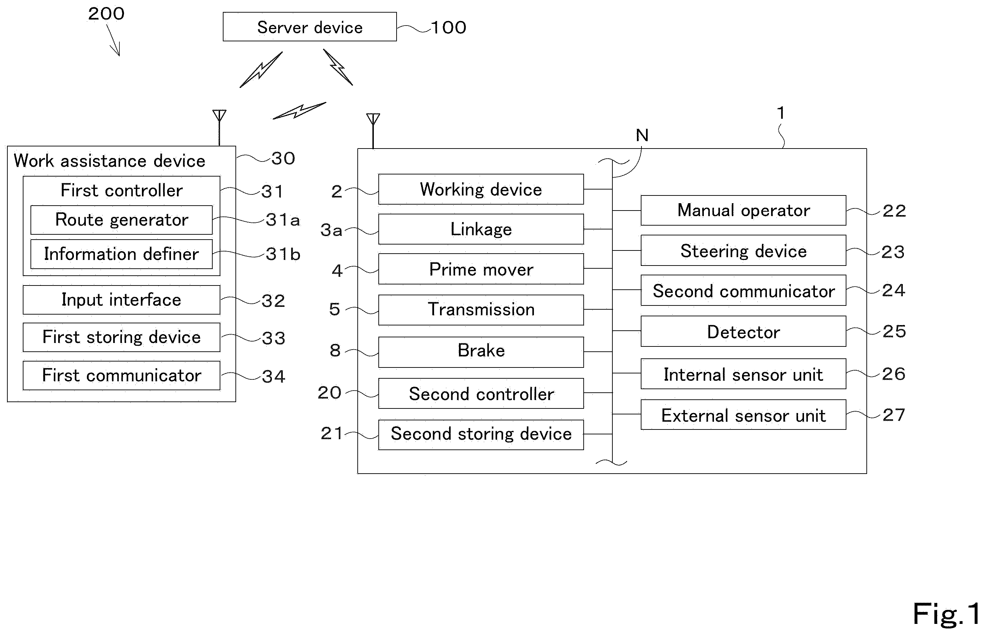

FIG. 1 is a drawing illustrating a first embodiment of an aiding system 200 for a working machine 1 that includes the working machine 1 and a work assistance device 30. The working machine 1 is an automatically traveling working machine including a working device 2 that performs working, and the work assistance device 30 aids the travel and working of the working machine 1. The working machine 1 will be described below.

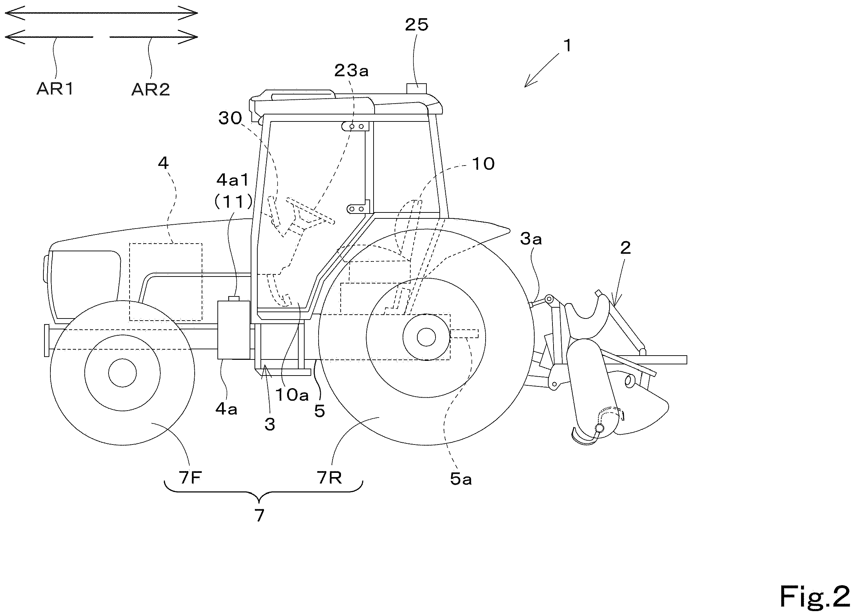

FIG. 2 is a side view of the working machine 1. As illustrated in FIG. 2, in the first embodiment, the working machine 1 is a tractor (working vehicle) equipped with the working device 2 (implement). The working machine 1 is not limited to a tractor, and may be any automatically traveling working machine including the working device 2 that performs working in an agricultural field H or the like, and may be a rice transplanter, a combine, or the like. For convenience of description, an example will be described below in which the working machine 1 is a tractor equipped with the working device 2, and description of the other working machines will be omitted. In the following description, the front side of a user (operator) sitting in a seat 10 of the working machine 1 (the direction of an arrow AR1 in FIG. 2) is regarded as a front direction, the rear side of the user (the direction of an arrow AR2 in FIG. 2) as a rear direction, the left side of the user as a left direction (the near side in FIG. 2), and the right side of the user as a right direction (the far side in FIG. 2). In the description, a horizontal direction being a direction orthogonal to the front-rear direction of the working machine 1 is regarded as a width direction.

As illustrated in FIGS. 1 and 2, the working machine 1 includes a vehicle body 3 (machine body), a prime mover 4, a transmission 5, and a traveling device 7. The vehicle body 3 supports various devices (in-vehicle devices) provided on the working machine 1. For example, the vehicle body 3 is provided with the seat 10 and a protective mechanism (for example, a cabin, a canopy, a ROPS, and the like) for protecting the seat 10. The vehicle body 3 is coupled to the working device 2 performing working in the agricultural field H. Specifically, on the front part and/or rear part of the vehicle body 3, a linkage 3a capable of being coupled to the working device 2 is provided.

In the example illustrated in FIG. 2, the linkage 3a is provided on the rear part of the vehicle body 3 and couples the working device 2 to the rear part of the vehicle body 3. The linkage 3a is, for example, a lift configured by a three-point linkage and the like and capable of moving the coupled working device 2 up and down. The linkage 3a is operated by a hydraulic cylinder being a hydraulic actuator and moves the coupled working device 2 up and down. Thus, by coupling the working device 2 to the linkage 3a, the working device 2 is installed on the working machine 1.

The working device 2 is a cultivator performing cultivation, a ridger making ridges, a fertilizer spreader spreading fertilizers, an agricultural chemical spreader spreading agricultural chemicals for control, a seed spreader performing seeding, a transplanter planting crops (young plants), a harvester harvesting crops, a mower mowing grass and the like, a tedder tedding grass and the like, a rake raking grass and the like, a baler baling grass and the like, or the like. That is, the user can select various types of working devices 2 described above and couple the selected working device 2 to the linkage 3a.

The working device 2 may be operated by power transmitted from a PTO shaft 5a, described later, or may include hydraulic equipment driven by hydraulic fluid delivered by a hydraulic pump and be operated by the hydraulic equipment. Alternatively, the working device 2 may include an electric motor driven by supplied electric power and be operated by the electric motor.

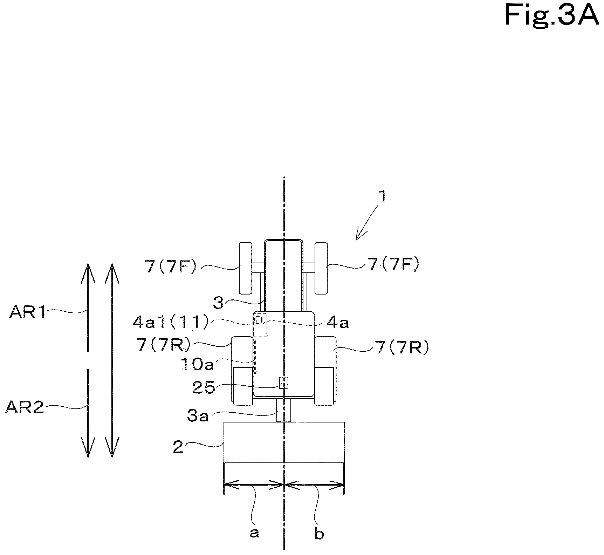

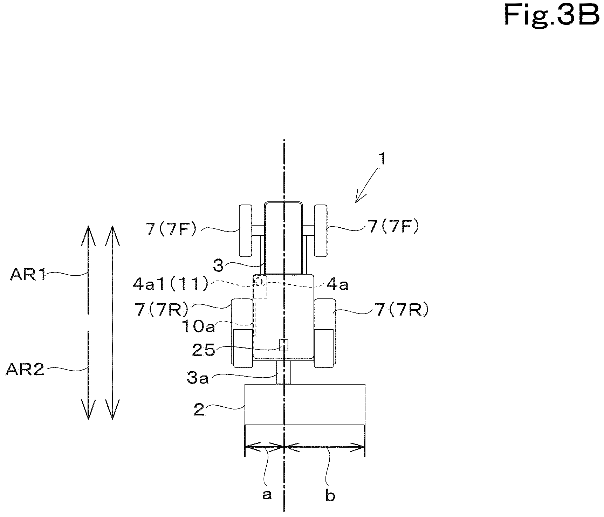

FIGS. 3A and 3B are plan views of the working machine 1. There are a case as illustrated in FIG. 3A where a central portion, in the width direction, of the working device 2 coupled to the linkage 3a is aligned in the width direction with a central portion, in the width direction, of the vehicle body 3 (working vehicle) and a case as illustrated in FIG. 3B where the central portion, in the width direction, of the working device 2 coupled to the linkage 3a is misaligned (offset) in the width direction with the central portion, in the width direction, of the vehicle body 3.

As illustrated in FIG. 3A, if the central portion, in the width direction, of the working device 2 is aligned in the width direction with the central portion, in the width direction, of the vehicle body 3, a length a from one end, in the width direction, of the working device 2 (or a working range of the working device 2) to the central portion in the width direction is equal to a length b from the other end, in the width direction, of the working device 2 (or the working range of the working device 2) to the central portion in the width direction (a = b). As illustrated in FIG. 3B, if the central portion, in the width direction, of the working device 2 is offset from the central portion, in the width direction, of the vehicle body 3, the length a from one end, in the width direction, of the working device 2 (or the working range of the working device 2) to the central portion in the width direction is different from the length b from the other end, in the width direction, of the working device 2 (or the working range of the working device 2) to the central portion in the width direction (a ≠ b).

The prime mover 4 is a power source outputting power. The prime mover 4 is an engine (for example, a diesel engine), an electric motor, or the like.

The transmission 5 can switch propulsion of the traveling device 7 by varying the speed and can switch between forward movement and backward movement of the traveling device 7. The transmission 5 includes a plurality of gears transmitting power, a shifter changing connection of the gears, a clutch switching between transmission and disconnection of power, and the like, and switches the propulsion of the traveling device 7 and switches between the forward movement and backward movement with the gears, the shifter, the clutch, and the like. With this, the power generated by the prime mover 4 is transmitted by the transmission 5 to the traveling device 7 to drive the traveling device 7, so that the vehicle body 3 travels forward or backward (the front direction AR1, the rear direction AR2).

As illustrated in FIG. 2, the transmission 5 is provided with the PTO shaft 5a for transmitting (outputting) the power output by the prime mover 4 to the outside. The transmission 5 can switch between driving and stopping of the PTO shaft 5a with, for example, the clutch, and the working device 2 connected to the PTO shaft 5a is driven by the power transmitted from the PTO shaft 5a.

The traveling devices 7 are provided in a pair in the width direction and support the vehicle body 3 in such a manner that the vehicle body 3 can travel. Each of the traveling devices 7 is provided with a front wheel 7F and a rear wheel 7R. In the example illustrated in FIG. 2, the front wheel 7F and the rear wheel 7R are of a tire type but may be of a crawler type. The working machine 1 also includes a brake 8 braking the traveling device 7. The brake 8 is a brake mechanism of a disk type and can switch between a brake state of braking and a release state of releasing braking.

As illustrated in FIG. 1, the working machine 1 includes a second controller 20, a second storing device (storage and/or memory) 21, a manual operator 22, a steering device 23, a second communicator 24, a detector 25, an internal sensor unit 26, and an external sensor unit 27.

The second controller 20 is a processing circuit including one or more processors. The second controller 20 is a controller for the working machine 1 and performs various types of control relating to the working machine 1. The second controller 20 is connected to various in-vehicle devices (the prime mover 4, the transmission 5, and the like) mounted on the working machine 1 in a communicable manner via a vehicle-mounted network N, such as CAN, ISOBUS, LIN, and FlexRay. For example, the second controller 20 performs control processing (operation) of the prime mover 4, the transmission 5, and the like based on signals (operation signals) input from the manual operator 22. For example, the second controller 20 controls the driving, stopping, and speed of the prime mover 4. The second controller 20 controls the transmission 5 to switch the operation speed and operation direction of the traveling devices 7, thereby varying the vehicle speed of the working machine 1 (vehicle body 3) and switching between forward movement and backward movement of the working machine 1. If power is transmitted from the PTO shaft 5a to the working device 2 coupled to the linkage 3a, the second controller 20 controls the transmission 5 to change the driving of the PTO shaft 5a, thereby controlling the working device 2.

If the working device 2 coupled to the linkage 3a is provided with an electronic control unit, the electronic control unit can communicate with the second controller 20, and the electronic control unit controls operation of each component of the working device 2 based on working commands received from the second controller 20 to perform agricultural work.

The second controller 20 includes one or more memories, various analog circuits, various digital circuits, and the like. The one or more memories retain (store) a software program executed by the one or more processors and various pieces of data. The second controller 20 can read the software program from the one or more memories and execute various types of processing based on the software program by using the one or more processors. The second controller 20 may execute various types of processing based on a predetermined logic circuit by using the one or more processors.

Examples of the processor include a central processing unit (CPU), a graphics processing unit (GPU), a digital signal processor (DSP), a field programmable gate array (FPGA), an application specific integrated circuit (ASIC), and the like.

The second controller 20 may execute various types of processing through mutual cooperation of a plurality of physically separated processors, and their configuration is not limited to the above-described configuration. In this case, the processors are each mounted on one or more computers physically separated from the working machine 1, and these processors are connected in a communicable manner via a network, such as the vehicle-mounted network N, a LAN, a WAN, and the Internet.

Such a configuration may be made that the software program is retained in a recording medium (a nonvolatile memory such as a HDD, a SSD, a CD-ROM, and a DVD-ROM) connected to the second controller 20 in a communicable manner or in an external server device 100 connected via the above-described network and is installed from these onto the above-described memory.

The second storing device 21 stores various pieces of information and data relating to the working machine 1 in a read-write format. The second storing device 21 includes a nonvolatile memory and/or the like. The second storing device 21 is connected to the second controller 20 in a communicable manner, and the second controller 20 can acquire various pieces of information and data stored in the second storing device 21.

The manual operator 22 includes a switch, a lever, a pedal, other keys, and the like that can be operated by the user sitting in the seat 10 or a user in the vicinity of the working machine 1.

The steering device 23 includes a steering axle and a power steering mechanism and changes the direction of the front wheels 7F of the traveling devices 7 to steer the vehicle body 3 by using the steering axle and the power steering mechanism. The working machine 1 can perform manual steering in which the steering device 23 steers the vehicle body 3 in accordance with operation of the steering wheel 23a and automatic steering in which the second controller 20 steers the vehicle body 3 by controlling the steering device 23.

When the prime mover 4, the transmission 5, or the brake 8 is operated in response to manual operation of an accelerator member or a brake pedal provided at the manual operator 22, the working machine 1 can travel or stop through operation of the traveling devices 7. Furthermore, when the second controller 20 controls the prime mover 4, the transmission 5, and the brake 8 to operate the traveling devices 7, the working machine 1 can automatically travel and stop.

That is, the working machine 1 can perform manual driving in which the user performs travel operation and steering operation and automatic travel (also referred to as automatic driving or autonomous travel) in which the second controller 20 automatically performs travel and steering. In the following description, a mode in which the working machine 1 is operated to travel and be steered by the user performing the manual driving is referred to as a manual mode, and a mode in which the second controller 20 automatically performs travel and steering as an automatic mode. The working machine 1 (second controller 20) can, for example, switch between the manual mode and the automatic mode with a mode change switch provided at the manual operator 22. The second controller 20 may automatically switch between the manual mode and the automatic mode based on a predetermined condition.

The second communicator 24 is a communication interface for the working machine 1 and includes a communication circuit. The second controller 20 communicates with at least the work assistance device 30 wirelessly or by wire and inputs and outputs (transmits and receives) various pieces of information and data, signals, and the like. The second communicator 24 need only be communicable with the work assistance device 30, and may be communicable with the server device 100 wirelessly via a public communication network, such as the Internet, or may be communicable with the work assistance device 30 via the server device 100.

The detector 25 detects a vehicle body position VP and a vehicle body orientation VD of the working machine 1. The vehicle body position VP and vehicle body orientation VD detected by the detector 25 are respectively a current vehicle body position VP and vehicle body orientation VD of the working machine 1. The vehicle body position VP is measured position information, such as data indicated by latitude and longitude, data indicated by coordinates (X-axis, Y-axis), or the like. The vehicle body position VP is, for example, the own position of the detector 25 or a position obtained by correcting the own position of the detector 25 to a predetermined position in the working machine 1. The detector 25 detects the vehicle body position VP and vehicle body orientation VD of the working machine 1 by using a satellite positioning system.

The detector 25 includes an inertial measurement unit (IMU) including an acceleration sensor, a gyroscope sensor, and the like. The detector 25 detects the roll angle, pitch angle, yaw angle, and the like of the vehicle body 3 by using the inertial measurement unit. Based on the vehicle body position VP detected by the detector 25 and a preliminarily defined route for the automatic travel (automatic travel route R1), the second controller 20 automatically performs travel and steering to cause the working machine 1 in the automatic mode to travel along the automatic travel route R1. The automatic travel route R1 is a route along which the working machine 1 is caused to automatically travel and is data indicated by latitude and longitude, data indicated by coordinates (X-axis, Y-axis), or the like. For example, the second controller 20 changes the travel speed between a straight travel section where the working machine 1 travels straight and a turn section where the working machine 1 turns in the automatic travel route R1.

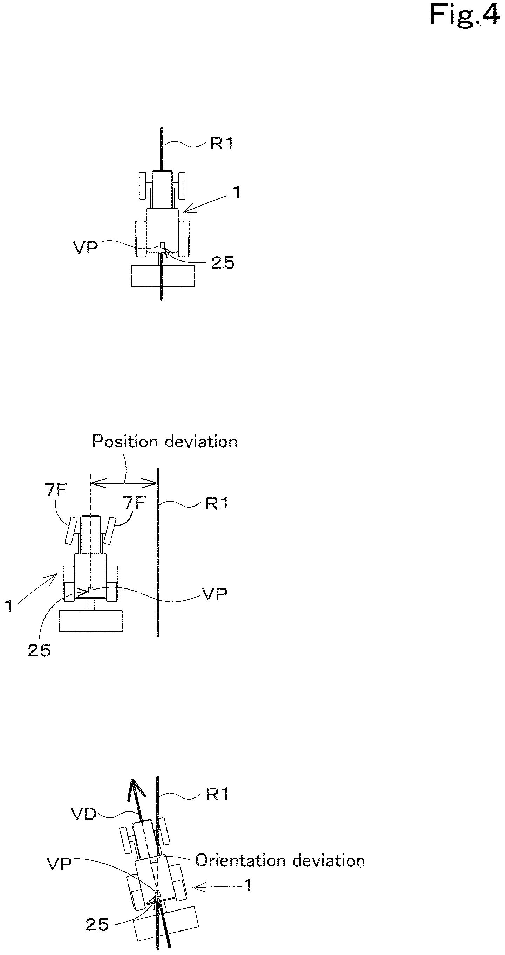

FIG. 4 is a diagram describing the automatic travel of the working machine 1. As illustrated in the upper diagram of FIG. 4, if the vehicle body position VP is located on the automatic travel route R1, the second controller 20 maintains the steering angle of the steering device 23, and as illustrated in the middle diagram of FIG. 4, if the vehicle body position VP is off the automatic travel route R1 (if the position deviation of the vehicle body position VP from the automatic travel route R1 is equal to or greater than a predetermined value), the steering angle of the steering device 23 is varied so that the vehicle body position VP approaches the automatic travel route R1 (so that the position deviation approaches zero). That is, the second controller 20 controls the steering device 23 to, if the vehicle body position VP is shifted to the left of the automatic travel route R1, change the steering direction rightward, and to, if the vehicle body position VP is shifted to the right of the automatic travel route R1, change the steering direction leftward.

As illustrated in the lower diagram of FIG. 4, the second controller 20 may automatically perform travel and steering based on the vehicle body orientation VD instead of or in addition to the vehicle body position VP detected by the detector 25 and the automatic travel route R1. In this case, the second controller 20 maintains the steering angle of the steering device 23 if the orientation deviation of the vehicle body orientation VD from the automatic travel route R1 is less than a predetermined value, and varies the steering angle of the steering device 23 so that the orientation deviation approaches zero if the orientation deviation is equal to or greater than the predetermined value.

If a predetermined condition that, for example, the work assistance device 30 has acquired a command from the user or the working machine 1 has reached the starting point of the automatic travel route R1 is satisfied, the second controller 20 in the automatic mode starts the automatic travel along the automatic travel route R1. If it is determined that the vehicle body position VP is located at the end of the automatic travel route R1, the second controller 20 controls the prime mover 4, the transmission 5, and the brake 8 to stop the travel using the traveling devices 7.

In the above-described example, the detector 25 detects the vehicle body position VP and vehicle body orientation VD of the working machine 1 by using a satellite positioning system but may detect the vehicle body position VP and vehicle body orientation VD of the working machine 1 by another method without using any satellite positioning system. For example, such a configuration may be made that the detector 25 detects the current vehicle body position VP and vehicle body orientation VD based on a result of sensing at each sensing device, described later, and an agricultural field map M indicating the agricultural field H (a map indicating position information of the agricultural field H and data indicated by latitude and longitude, data indicated by coordinates (X-axis, Y-axis), or the like).

In the above example, the case where the working machine 1 includes the detector 25 has been described; however, the detector 25 need only detect the vehicle body position VP and vehicle body orientation VD of the working machine 1 and may not be provided in the working machine 1. For example, such a configuration may be used that the detector 25 is provided in another terminal (for example, the work assistance device 30, a portable terminal carried by the user, or the like) communicable with the second controller 20 and the vehicle body position VP and the vehicle body orientation VD are transmitted from the other terminal to the second controller 20.

The internal sensor unit 26 includes a plurality of sensors installed at various components of the working machine 1. The sensors detect the status of the in-vehicle devices of the working machine 1. This allows the second controller 20 to detect abnormalities (errors) occurring in the in-vehicle devices (for example, the working device 2, and the prime mover 4, the transmission 5, the brake 8, the traveling devices 7, the linkage 3a, the steering device 23, the manual operator 22, and the like) of the working machine 1, in other words, abnormalities occurring in the working machine 1 based on output signals from the sensors of the internal sensor unit 26. If an output signal from any of the sensors cannot be correctly read or if a value indicated by the output signal is an abnormal value (if the value indicated by the output signal is outside a normal range), the second controller 20 detects that an abnormality is occurring in the device to which the sensor is attached.

For example, if the internal sensor unit 26 includes a sensor (water temperature sensor) to detect the temperature of cooling water for the prime mover 4 and if the output signal from the water temperature sensor indicates that the temperature of the cooling water is equal to or higher than a predetermined value, the second controller 20 detects that an abnormality is occurring in the prime mover 4.

If the internal sensor unit 26 includes a sensor (oil temperature sensor) to detect the temperature of hydraulic fluid and if the output signal from the oil temperature sensor indicates that the temperature of the hydraulic fluid is equal to or higher than a predetermined value, the second controller 20 detects that an abnormality is occurring in a hydraulic system of the working machine 1.

If an abnormality occurs in any of the in-vehicle devices of the working machine 1 and if the degree of the abnormality is relatively high, the second controller 20 in the automatic mode controls the prime mover 4, the transmission 5, and the brake 8 to stop the travel using the traveling devices 7 (suspend the automatic travel). For example, upon detecting that the temperature of the cooling water is equal to or higher than the predetermined value (first threshold) and is lower than a second threshold from the output signal from the water temperature sensor, the second controller 20 detects that an abnormality is occurring in the prime mover 4 but the degree of the abnormality is relatively low. On the other hand, upon detecting that the temperature of the cooling water is equal to or higher than the second threshold from the output signal from the water temperature sensor, the second controller 20 detects that the degree of the abnormality is relatively high and stops the travel using the traveling devices 7.

In the first embodiment, if an abnormality occurs in any of the in-vehicle devices of the working machine 1 and if the degree of the abnormality is relatively high, the second controller 20 in the automatic mode stops the travel using the traveling devices 7; however, even if an abnormality occurs in the in-vehicle devices of the working machine 1, the automatic travel may be continued irrespective of the degree of the abnormality. Alternatively, even if an abnormality occurs in the in-vehicle devices of the working machine 1, the second controller 20 in the automatic mode may stop the travel using the traveling devices 7 irrespective of the degree of the abnormality. Alternatively, the second controller 20 in the automatic mode may reduce the travel speed by controlling the transmission 5 and the brake 8 as the degree of the abnormality increases, in accordance with the degree of the abnormality.

The second controller 20 can also detect whether the in-vehicle devices of the working machine 1 need supply from external sources based on the output signals from the sensors of the internal sensor unit 26. If the prime mover 4 is an engine, the in-vehicle device of the working machine 1 that may need supply from an external source is, for example, a fuel tank 4a provided in the working machine 1 and storing fuel to be supplied to the engine. The internal sensor unit 26 includes a sensing unit (fuel level sensor) to detect the remaining amount of the fuel tank 4a, and, if the remaining amount of the fuel is less than a predetermined value, the second controller 20 detects that fuel supply (refueling) from the external source is needed based on the output signal from the fuel level sensor.

If the prime mover 4 is an electric motor, the in-vehicle device of the working machine 1 that may need supply from an external source is, for example, a battery unit provided in the working machine 1 and storing electric power to be supplied to the electric motor. The internal sensor unit 26 includes a sensing unit (for example, a battery management unit (BMU) monitoring and controlling the battery unit) to detect the remaining capacity of the battery unit, and, if the remaining capacity of the electric power is less than a predetermined value, the second controller 20 detects that electric power supply (charging) from the external source is needed based on the output signal from the sensing unit.

Furthermore, the in-vehicle device of the working machine 1 that may need supply from an external source is the working devices 2, such as the fertilizer spreader, the agricultural chemical spreader, the seed spreader, and the transplanter, requiring supply of materials (such as agricultural chemicals, fertilizers, seeds, and crops to be applied to the agricultural field H) from the external sources. The internal sensor unit 26 includes a sensing unit to detect the remaining amount of the materials (for example, an ultrasonic sensor to detect the height of the materials in a tank or a hopper or a strain sensor to detect the weight of the materials), and, if the remaining amount of the materials is less than a predetermined value, the second controller 20 detects that material supply (refilling) from the external source is needed based on the output signal from the sensing unit.

If the in-vehicle device of the working machine 1 needs supply from an external source and if the necessity (urgency) of the supply is relatively high, the second controller 20 controls the prime mover 4, the transmission 5, and the brake 8 to stop the travel using the traveling devices 7 (suspend the automatic travel) in the automatic mode. For example, with the prime mover 4 being an engine as in the first embodiment, the second controller 20 detects that, if the remaining amount of the fuel is less than a predetermined value (third threshold) and equal to and greater than a fourth threshold, fuel supply is needed but the urgency is relatively low and, if the remaining amount of the fuel is less than the fourth threshold, the necessity of the supply is relatively high.

In the first embodiment, if the urgency of supply is relatively high, the second controller 20 in the automatic mode stops the travel using the traveling devices 7; however, even if it is detected that supply from an external source is needed, the automatic travel may be continued irrespective of the urgency of the supply. Alternatively, upon detecting that supply from an external source is needed, the second controller 20 in the automatic mode may stop the travel using the traveling devices 7 irrespective of the urgency of the supply. Alternatively, the second controller 20 may reduce the travel speed by controlling the transmission 5 and the brake 8 as the urgency increases, in accordance with the urgency of the supply.

The external sensor unit 27 includes sensing devices, such as laser sensors like LiDAR, ultrasonic sensors, and cameras. Each sensing device is provided at the front part, rear part, and right and left side parts of the vehicle body 3. Each sensing device detects whether an object is in the vicinity of the working machine 1, the distance to the object, and the like. The second controller 20 controls the transmission 5, the brake 8, the steering device 23, and the like based on an output signal from each sensing device. For example, if there is an object in the forward direction of the working machine 1 and if the distance from the working machine 1 to the object is less than a predetermined value, the second controller 20 controls the transmission 5 and the brake 8 to reduce the speed of or stop the traveling devices 7.

The work assistance device 30 is a portable information processor (computer), such as a tablet-type terminal device. The work assistance device 30 is mounted, for example, in the vicinity of the seat 10 of the working machine 1 and can be attached to and detached from the working machine 1. In other words, the working machine 1 includes the detachable work assistance device 30. When boarding the working machine 1 in the manual mode and manually operating the working machine 1, the user attaches the work assistance device 30 to the working machine 1. On the other hand, when the working machine 1 in the automatic mode automatically travels and the user does not board the working machine 1, the user preferably detaches the work assistance device 30 from the working machine 1 and carries it.

As illustrated in FIG. 1, the work assistance device 30 includes a first controller 31, an input interface 32, a first storing device (storage and/or memory) 33, and a first communicator 34. The first controller 31 is a processing circuit including one or more processors. The first controller 31 is a controller for the work assistance device 30 and performs various types of control relating to the work assistance device 30. The first controller 31 includes one or more memories, various analog circuits, various digital circuits, and the like. The one or more memories retain (store) a software program executed by the one or more processors and various pieces of data. The first controller 31 can read the software program from the one or more memories and execute various types of processing based on the software program by using the one or more processors.

As in the description of the second controller 20, the first controller 31 may execute various types of processing based on a predetermined logic circuit by using the one or more processors. As in the description of the second controller 20, the first controller 31 may execute various types of processing through mutual cooperation of a plurality of physically separated processors, and their configuration is not limited to the above-described configuration.

The input interface 32 is an input interface to receive input of user-specified information. In the first embodiment, the input interface 32 is a display interface to display various information on a screen and receive operation relating to the information displayed on the screen. The input interface 32 is a touch panel display and receives input of various user-specified information or instructions upon user operation on the input interface 32. That is, the input interface 32 is a user interface and functions also as a display and an output interface of the work assistance device 30. The user-specified information received by the input interface 32 is acquired by the first controller 31, and the first controller 31 uses the information in various processes and stores the information in the first storing device 33. The screen of the input interface 32 is controlled by the first controller 31.

Note that, although the input interface 32 in the above-described example is a display interface which is a touch panel display, the input interface 32 is not limited to the display interface, provided that the input interface 32 is configured to at least receive input of user-specified information. The input interface 32 may be configured independently of a display to display various information and an output interface.

The first storing device 33 stores various information and data in a read-write format. The first storing device 33 includes a nonvolatile memory and/or the like. The first storing device 33 is connected to the first controller 31 in a communicable manner, and the first controller 31 can acquire various information and data stored in the first storing device 33.

The first communicator 34 is a communication interface of the work assistance device 30 and includes a communication circuit. The first communicator 34 can communicate with the second communicator 24 of the working machine 1 wirelessly or by wire. In the first embodiment, the first communicator 34 is a communicator to communicate with the second communicator 24 wirelessly, and to perform wireless communications using, for example, Bluetooth (registered trademark) Low Energy under the specifications of Bluetooth (registered trademark) in the communication standard IEEE 802.15.1 series, WiFi (registered trademark) in the communication standard IEEE 802.11.n series, and/or the like. This allows the first controller 31 to communicate with the second controller 20 of the working machine 1 via the first communicator 34 and the second communicator 24. The first communicator 34 may be communicable with the server device 100 wirelessly via a public communication network such as the Internet. This allows the first communicator 34 to input and output (transmit and receive) information, data, signals, and the like to and from the working machine 1 and the server device 100. The first communicator 34 may be communicable with the working machine 1 via the server device 100.

The first controller 31 acquires at least user-specified information received by the input interface 32 and information relating to the agricultural field H where the working machine 1 performs work (agricultural field information). Specifically, for example, upon user operation on the input interface 32, the input interface 32 receives various user-specified information, and the first controller 31 acquires the information. If the server device 100 stores various user-specified information input via another information processor, the first controller 31 may acquire such information from the server device 100 via the first communicator 34. The first controller 31 stores such information in the first storing device 33 or a memory of the first controller 31.

The agricultural field information includes information indicating the identification information, position, and area of the agricultural field H, an agricultural field map M indicating the agricultural field H, and/or the like. Such agricultural field information is defined in association with each agricultural field H. The agricultural field map M indicates position information of a contour OL of the agricultural field H and various regions/areas and the like defined in the agricultural field H. The position and area of the agricultural field H and the agricultural field map M are defined by the first controller 31 or by an information processor different from the first controller 31, based on map information acquired from an external device such as the server device 100 or based on a plurality of vehicle body positions VP periodically detected by the detector 25 while the working machine 1 is caused to travel along a peripheral path of the agricultural field H, for example. The agricultural field information may include an off-limits area BE where the working machine 1 is prohibited from traveling, the purpose of use of the agricultural field H, a crop to be grown, a growing plan (schedule) of the crop, and/or the like. The off-limits area BE is, for example, position information of an area of the agricultural field H where the working machine 1 is prohibited from traveling. The off-limits area BE is, for example, position information of obstacle(s) such as a tree and/or a rock in the agricultural field H or position information of an area specified by the user to restrict entry of the working machine 1.

The first controller 31 acquires work information relating to agricultural work in the agricultural field H, machine information relating to the working machine 1, and device information relating to the working device 2, in addition to the agricultural field information.

The work information includes information relating to agricultural work to be performed in the agricultural field H. Such work information is defined in association with each agricultural field H. The work information includes, for example, a work condition, a use plan for the working machine 1 and the working device 2, a work plan, and/or the like. The work information may include, as work condition(s), the number of headlands (headland count) in the agricultural field H and/or an overlap in which the working width of the working device 2 overlaps that in an adjacent row. The headland is, for example, a region where the working machine 1 turns and is defined at an outer edge portion (in the vicinity of a peripheral path or the like) of the agricultural field H. The determination of whether to grow a crop in the headland is up to the farmer.

The machine information includes information indicating the identification information, type, dimensions, specifications, and/or the like of the working machine 1. Specifically, the machine information includes information relating to the working machine 1, excluding information relating to the working device 2. The machine information may also be stored in a memory of the second controller 20 of the working machine 1.

The device information includes information indicating the identification information, type, dimensions, specifications, working width (lateral width of the working range), and/or the like of the working device 2. Additionally or alternatively, the device information may include the amount of offset of the widthwise center of the working device 2 relative to the widthwise center of the vehicle body 3. The working device 2 may include a memory and the device information may also be stored in the memory.

The first controller 31 also acquires status information indicating the status of the working machine 1. The status information includes information detected by the detector 25 provided in or on the working machine 1 and includes at least a vehicle body position VP detected by the detector 25. In the first embodiment, the status information includes vehicle body orientation VD in addition to the vehicle body position VP. The first controller 31 acquires the status information from the second controller 20 via the first communicator 34 and the second communicator 24 at predetermined time intervals. This allows the first controller 31 to acquire the vehicle body position VP and vehicle body orientation VD of the working machine 1. The first controller 31 causes the first storing device 33 to store, for a predetermined period of time, the identification information of the working machine 1 and the vehicle body position VP of the working machine 1 in association with each other. This allows the first controller 31 to detect the movement path of the working machine 1.

The status information may include information detected by the internal sensor unit 26 and the external sensor unit 27 in addition to the information detected by the detector 25. In this case, the first controller 31 can detect the status of the working machine 1 and/or status of work (progress of work) done by the working machine 1 in more detail based on the information included in the status information. For example, the first controller 31 can detect a record of work performed by the working machine 1 (position information of an area where the working device 2 has completed work, which may be hereinafter referred to as a worked area CE) based on the vehicle body position VP included in the status information, the device information, information of the raised/lowered position of the linkage 3a, operating information of the working device 2 (drive information of the PTO shaft 5a and/or control information of hydraulic fluid supplied to the working device 2), and/or the like.

For example, if the working device 2 is a cultivator, the first controller 31 can acquire the working width of the cultivator from the device information and detect the area where the cultivator has completed tillage work based on the movement path of the working machine 1 based on vehicle body positions VP, the working width, the raised/lowered position of the linkage 3a (whether the cultivator is in contact with the ground), and the drive information of the PTO shaft 5a. If the working device 2 is a spreader, the first controller 31 can acquire the working width (spreading width) of the spreader from the device information and determine the area where the spreader has completed spreading work based on the movement path of the working machine 1 based on vehicle body positions VP, the spreading width, and the drive information of the PTO shaft 5 a. The first controller 31 stores the detected worked area CE in association with the agricultural field H and the work date and time in the first storing device 33.

The first controller 31 (work assistance device 30) performs an assisting process to assist in the travel and work of the working machine 1 based on the acquired information. Specifically, the first controller 31 includes a route generator 31a. The route generator 31a includes, for example, a software program installed on the first controller 31. As another example, the route generator 31a may include hardware such as a semiconductor device and/or an electric circuit, and may be provided in the work assistance device 30.

The route generator 31a generates a route R1 (automatic travel route) to be automatically traveled by the working machine 1. Specifically, the route generator 31a generates, as the automatic travel route R1, an imaginary route to be automatically traveled by the working machine 1 while the working device 2 performs agricultural work. The route generator 31a generates the automatic travel route R1 with the simulation of the agricultural work done by the working device 2 and the automatic travel of the working machine 1.

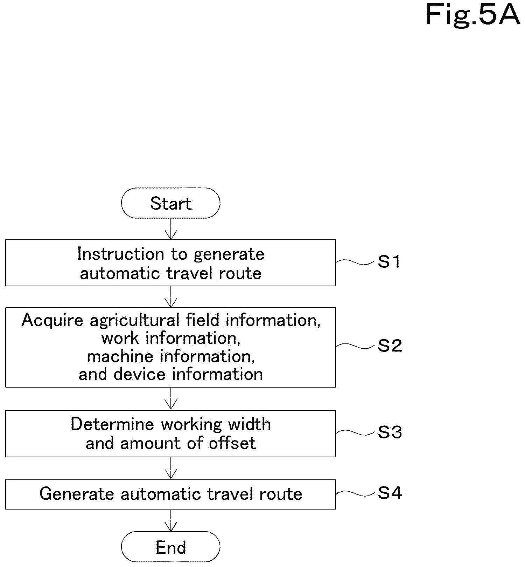

FIG. 5A is a flowchart illustrating an example of a process to generate the automatic travel route R1 performed by the work assistance device 30. Each step in FIG. 5A is performed by the first controller 31 in accordance with software program(s) stored in a memory or the first storing device 33.

For example, the user operates the input interface 32 to specify (input) an agricultural field H, agricultural work, and a working machine 1 and a working device 2 to be used, and to issue an instruction to generate an automatic travel route R1 (S1). The route generator 31a acquires the agricultural field information and work information corresponding to the specified agricultural field H, the machine information of the working machine 1, and the device information of the working device 2 from at least one of a memory or the first storing device 33, or from the server device 100 via the first communicator 34 (S2). That is, the first controller 31 acquires the agricultural field information, the work information, the machine information, and the device information from at least one of a memory of the work assistance device 30 or a memory of the server device 100.

Next, the route generator 31a determines the working width and the amount of offset of the working device 2 based on the device information of the working device 2 (S3). The route generator 31a generates the automatic travel route R1 based on the acquired information (S4). In so doing, the route generator 31a generates the automatic travel route R1 such that the following objectives are achieved: (P1) the working machine 1 avoids traveling through the worked area CE as much as possible, (P2) the automatic travel route R1 includes no or few multi-point-turn portions where the working machine 1 needs to make a multi-point turn, (P3) the automatic travel route R1 includes as short a no-working distance (which is the distance traveled by the working machine 1 with the working device 2 not performing work) as possible, and/or the like. Such objectives are examples, and at least one of the objectives is prioritized. Objective(s) other than the above-described objectives (P1) to (P3) may be prioritized.

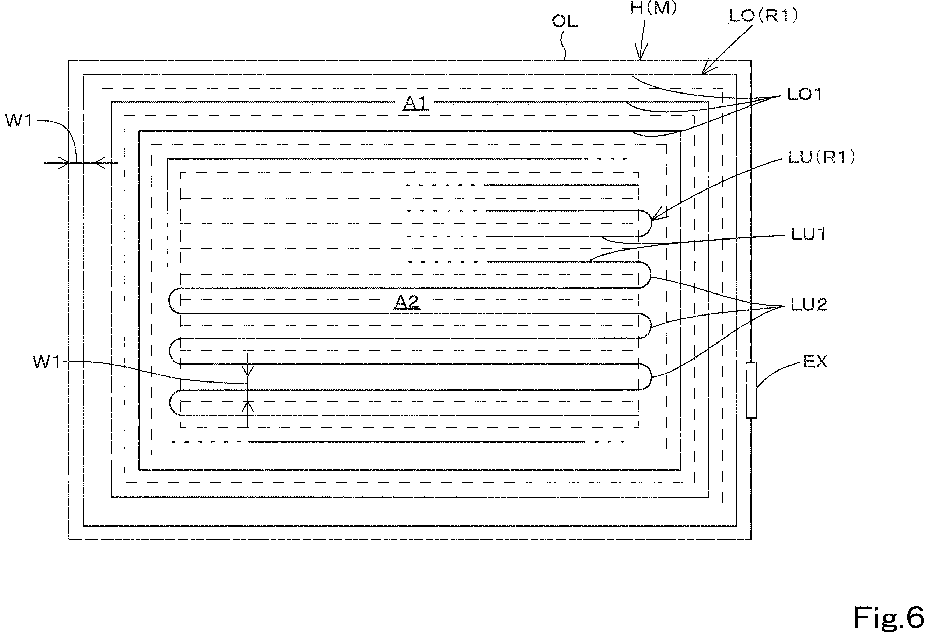

FIG. 6 illustrates an example of the automatic travel route R1 generated on the agricultural field map M. As illustrated in FIG. 6, the route generator 31a generates, for example, the automatic travel route R1 including a headland route portion LO along which work is performed in the headland (headland region A1) of the agricultural field H and an inner route portion LU along which work is performed in an area located inward of the headland region A1 (inner region A2). In the example illustrated in FIG. 6, the headland is generated such that the headland expands from the contour OL of the agricultural field H toward the interior of the agricultural field H, and the headland route portion LO includes one or more travel lines (circuit lines LO1) along which the working machine 1 travels in a circle in the headland region A1. The number of the circuit lines LO1 of the headland route portion LO corresponds to the number of the headlands (headland count) in the agricultural field H. The route generator 31a generates the headland route portion LO on the agricultural field map M included in the agricultural field information based on the headland count included in the acquired work information, the working width included in the device information, and relative position(s).

For example, the route generator 31a generates, in an inner area of the agricultural field H, the circuit lines LO1 (the number of which corresponds to the number of the headlands) in the order from the outermost circuit line LO1 (reference line), by shifting inward the innermost circuit line LO1 by a predetermined width W1 (for example, a width calculated from the working width and the overlap). That is, the interval between adjacent circuit lines LO1 is the predetermined width W1. The route generator 31a then generates the headland region A1 and the inner region A2 based on the innermost circuit line LO1 and the working width.

After generating the headland region A1 and the inner region A2, the route generator 31a generates the inner route portion LU. Specifically, the route generator 31a generates the inner route portion LU including a plurality of straight lines LU1 connecting opposite edges in the lengthwise direction and separated from each other by the predetermined width W1, and curved line(s) LU2 connecting adjacent straight lines LU1 at the headland region A1. That is, in the example illustrated in FIG. 6, the headland route portion LO is a route portion along which the working machine 1 travels in a circle in the headland (headland region A1) of the agricultural field H, and the inner route portion LU is a route portion along which the working machine 1 travels back and forth within the area inward of the headland (inner region A2).

Note that the above-described automatic travel route R1 and its generating method performed by the route generator 31a are merely examples, and the automatic travel route R1 and its generating method are not limited to the above-described examples. For example, if work is not performed in the headland, the route generator 31a generates the automatic travel route R1 including only the inner route portion LU with no headland route portions LO, as the automatic travel route R1 in which work is not performed in the headland. Also note that, although the route generator 31a generates the headland region A1 and the inner region A2 based on the innermost circuit line LO1 and the predetermined width W1, the agricultural field information may include position information of the headland region A1 and the inner region A2 in advance.

As illustrated in FIG. 1, the first controller 31 includes an information definer 31b. The information definer 31b includes, for example, a software program installed on the first controller 31. As another example, the information definer 31b may include hardware such as a semiconductor device, an electric circuit and/or the like, and may be provided in the work assistance device 30.

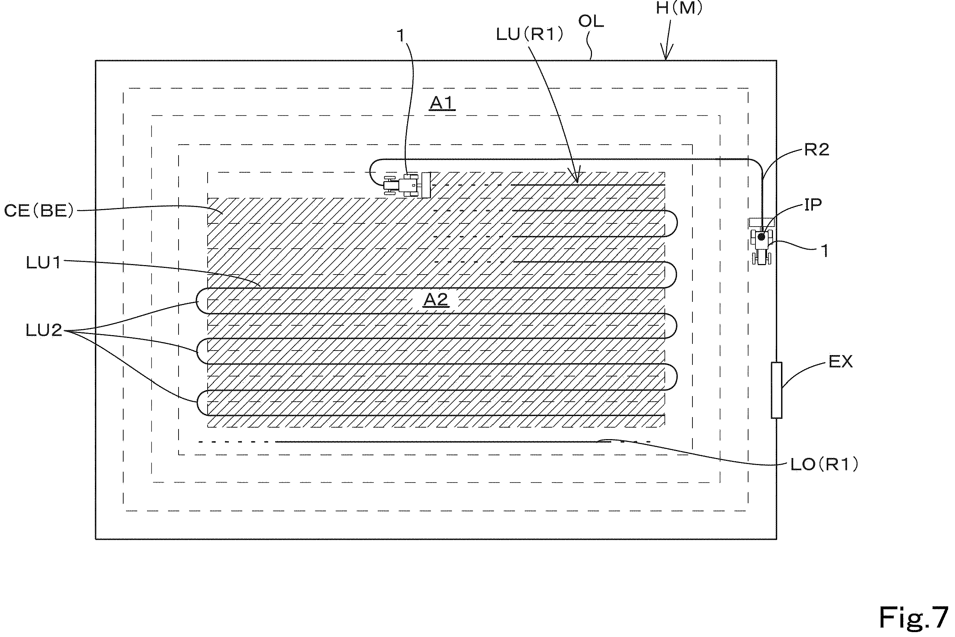

The information definer 31b defines guide information based on which the working machine 1 is to be guided from the automatic travel route R1 (which is automatically traveled by the working machine 1 in the agricultural field H) to a predetermined position (guide point IP), based on the information acquired by the first controller 31. The guide point IP is a position at least different from points on the automatic travel route R1, and the working machine 1 is guided to the position different from the points on the automatic travel route R1 based on the guide information. FIG. 7 illustrates the automatic travel route R1 and the guide point IP. As illustrated in FIG. 7, the working machine 1 moves (is guided) from the automatic travel route R1 to the guide point IP based on the guide information.

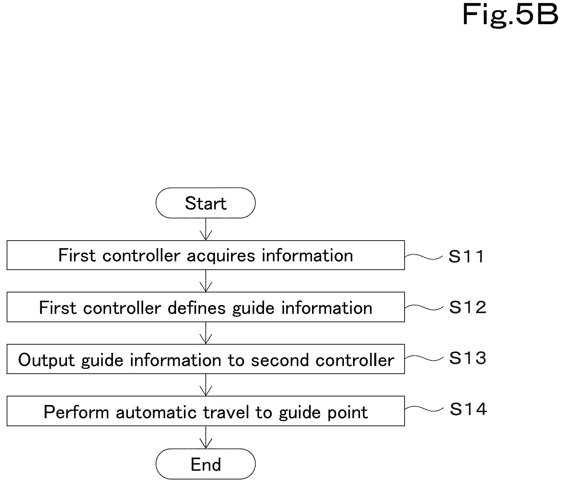

FIG. 5B is a flowchart illustrating definition of the guide information performed by the work assistance device 30, and the like. Each step in FIG. 5B is performed by the first controller 31 and the second controller 20 in accordance with software program(s). As illustrated in FIG. 5B, the first controller 31 acquires information (S11), the first controller 31 (information definer 31b) defines guide information based on the acquired information (S12), and the first controller 31 outputs the guide information to the second controller 20 (S13). Such guide information is defined for each agricultural field H. If predetermined condition(s) (guide condition(s)) is/are satisfied, the first controller 31 outputs the guide information to the second controller 20 (working machine 1) via the first communicator 34 and the second communicator 24. The second controller 20 automatically performs travel and steering based on the guide information (S14). Specifically, the second controller 20 moves the working machine 1 (vehicle body 3) to the guide point IP, and causes the working machine 1 to face in a predetermined direction and stop.

The predetermined guide condition(s) include(s), for example, at least one of first to third conditions (each of which may be hereinafter referred to as a guide condition) described below. The first condition is that the working machine 1 has moved to the end of the automatic travel route R1. For example, if determining that the vehicle body position VP is located at the end of the automatic travel route R1 based on the automatic travel route R1 and the vehicle body position VP, the second controller 20 outputs a signal (arrival signal) indicating that the working machine 1 has moved to the end of the automatic travel route R1 to the first controller 31 via the second communicator 24 and the first communicator 34. Upon acquiring the arrival signal from the second controller 20, the first controller 31 determines that the working machine 1 has moved to the end of the automatic travel route R1.

The second condition is that an abnormality is occurring in at least in-vehicle device(s) of the working machine 1 while the working machine 1 is automatically traveling along the automatic travel route R1. If the second controller 20 detects an abnormality occurring in the in-vehicle device(s) of the working machine 1 based on the output signal from the sensors of the internal sensor unit 26 and the degree of the abnormality is equal to or greater than a predetermined degree, the second controller 20 outputs a signal (abnormality signal) indicating the content of the abnormality to the first controller 31 via the second communicator 24 and the first communicator 34. The abnormality signal may include information indicating which device is subjected to the abnormality (for example, the identification information of the device). If the degree of the abnormality occurring in the in-vehicle device(s) of the working machine 1 is relatively high, the second controller 20 outputs the abnormality signal to the first controller 31. In other words, in the first embodiment, if the degree of the abnormality is relatively high and the second controller 20 suspends the automatic travel to stop the working machine 1, the abnormality signal is output to the first controller 31.

The second controller 20 need only output the abnormality signal to the first controller 31 at least if an abnormality occurs in in-vehicle device(s) of the working machine 1, and may output the abnormality signal to the first controller 31 even if the degree of the abnormality is relatively low. In this case, the second controller 20 may output the abnormality signal to the first controller 31 while the working machine 1 is continuing the automatic travel.

Upon acquiring the abnormality signal from the second controller 20, the first controller 31 determines that an abnormality is occurring in the in-vehicle device(s) of the working machine 1. The abnormality signal includes identification information based on which the in-vehicle device(s) subjected to the abnormality is identified, and identification information based on which the content of the abnormality is identified.

The first storing device 33 stores a first management table including the identification information of the in-vehicle device(s) for which abnormalities can be detected by the sensors of the internal sensor unit 26, the position(s) of the in-vehicle device(s) in the working machine 1, and the identification information of the content of abnormalities that may occur in the in-vehicle device(s), which are associated with each other. Thus, based on the acquired abnormality signal and the first management table, the first controller 31 can acquire the content of the abnormality, the in-vehicle device(s) subjected to the abnormality, and the position(s) of the in-vehicle device(s) in the working machine 1, from the first storing device 33.

For example, upon detecting that the temperature of cooling water of the prime mover 4 is equal to or higher than a predetermined value based on the output signal from the water temperature sensor, the second controller 20 outputs an abnormality signal indicating that the temperature of the cooling water is abnormal to the first controller 31. Upon acquiring the abnormality signal, the first controller 31 refers to the first management table in the first storing device 33 to acquire (i) information indicating that the temperature of the cooling water is equal to or higher than the predetermined value, (ii) information indicating that an abnormality is occurring in the prime mover 4, and (iii) the position of the prime mover 4 in the working machine 1 (in the first embodiment, a front portion of the vehicle body 3).

The third condition is that the working machine 1 needs supply from an external source. Upon detecting that at least in-vehicle device(s) of the working machine 1 needs some supply from an external source based on the output signals from the sensors of the internal sensor unit 26, the second controller 20 outputs a signal (request signal) indicating that the supply is requested to the first controller 31 via the second communicator 24 and the first communicator 34. The request signal may include information indicating which in-vehicle device needs the supply (for example, the identification information of the in-vehicle device). If the urgency of the supply to the in-vehicle device of the working machine 1 is relatively high, the second controller 20 outputs the request signal to the first controller 31. In other words, in the first embodiment, if the urgency of the supply is relatively high and the second controller 20 suspends the automatic travel to stop the working machine 1, the request signal is output to the first controller 31.

The second controller 20 need only output the request signal to the first controller 31 at least if in-vehicle device(s) of the working machine 1 needs supply from an external source, and may output the request signal to the first controller 31 even if the urgency of the supply is relatively low. In this case, the second controller 20 may output the request signal to the first controller 31 while the working machine 1 is continuing the automatic travel.

The first storing device 33 stores a second management table including the identification information of the in-vehicle device(s) for which the sensors of the internal sensor unit 26 can detect whether supply is necessary and the position(s) of the in-vehicle device(s) in the working machine 1, which are associated with each other. Thus, based on the acquired request signal and the second management table, the first controller 31 can acquire the in-vehicle device(s) that needs supply and the position of the in-vehicle device(s) in the working machine 1, from the first storing device 33. The request signal may include information indicating the status in which the necessity of supply is detected (for example, the remaining amount of fuel if it is detected that supply of fuel is needed).

For example, upon detecting that the fuel of the prime mover 4 (engine) is less than a predetermined amount based on the output signal from the fuel level sensor, the second controller 20 outputs a request signal indicating that supply of the fuel is needed to the first controller 31. Upon acquiring the request signal, the first controller 31 refers to the second management table in the first storing device 33 to acquire information indicating that the fuel tank 4a needs a supply of fuel, and the position of a fuel inlet 4a1 of the fuel tank 4a in the working machine 1 (in the first embodiment, a position at a left portion of the vehicle body 3 and diagonally leftward and forward of the seat 10).

Note that the guide conditions are examples and other guide conditions may be used. For example, instead of or in addition to the guide conditions, if the user performs predetermined operation (instructing operation) on the input interface 32 to intentionally start automatic travel based on the guide information (if a fourth condition is satisfied), the first controller 31 may output the guide information to the second controller 20 (working machine 1) via the first communicator 34 and the second communicator 24.

Also note that, although the above description discusses the case where the second controller 20 outputs the arrival signal, the abnormality signal, and the request signal to the first controller 31, the first controller 31 may determine whether the first to third condition (s) are/is satisfied based on information (the vehicle body position VP, the output signals from the sensors of the internal sensor unit 26, and/or the like) acquired from the second controller 20.

The following description discusses a case where, if at least one of the guide conditions is satisfied, the first controller 31 outputs the guide information to the second controller 20. Note, however, that the first controller 31 need only output the guide information to the second controller 20 based on at least one of the guide conditions to cause the working machine 1 to automatically travel, and the at least one condition may be only the first condition, only the third condition, or other guide condition(s).

Specifically, the guide information includes position information of the guide point IP based on which the working machine 1 is guided to a predetermined position (a position different from points on the automatic travel route R1) in the agricultural field H and orientation information indicating the orientation of the working machine 1 at the guide point IP. The position information of the guide point IP is measured position information such as data represented by latitude and longitude, data represented by coordinates (X-axis, Y-axis), and/or the like.

The following details the definition of the position information and orientation information about the guide point IP performed by the information definer 31b. In the first embodiment, the information definer 3 1b defines the position information of the guide point IP based on the information acquired by the first controller 31 and on manual operation by the user. For example, before the working machine 1 automatically travels, the information definer 31b defines the position information of the guide point IP in advance and stores the defined position information of the guide point IP in the first storing device 33. In the first embodiment, similar to defining the position information of the guide point IP, the information definer 31b defines the orientation information (the orientation of the working machine 1 at the guide point IP) based on the manual operation by the user.

The position information and/or the orientation information about the guide point IP defined by the information definer 3 1b may be different or the same between the guide conditions. The following description of the first embodiment discusses an example case in which the position information and orientation information about the guide point IP defined by the information definer 31b are common to the guide conditions.

The input interface 32 receives input of a user-specified position and a user-specified orientation about the guide point IP. The input interface 32 receives input of, as the position of the guide point IP, a user-specified position which is within the agricultural field H and which is in the vicinity of the contour OL of the agricultural field H (an edge portion of the agricultural field H, for example, a peripheral path) in the agricultural field H where the working machine 1 performs work. In other words, the input interface 32 does not receive input of, as the position of the guide point IP, a user-specified position which is outside the agricultural field H where the working machine 1 performs work or which is inward of the vicinity of the contour OL of the agricultural field H. Thus, the guide point IP is set close to the peripheral path of the agricultural field H.

The region representing the peripheral path of the agricultural field H is included in advance in the agricultural field map M of the agricultural field information. The peripheral path of the agricultural field H may be freely set by the user, or another terminal may receive input of the width of the region and the peripheral path may be set automatically based on the width.

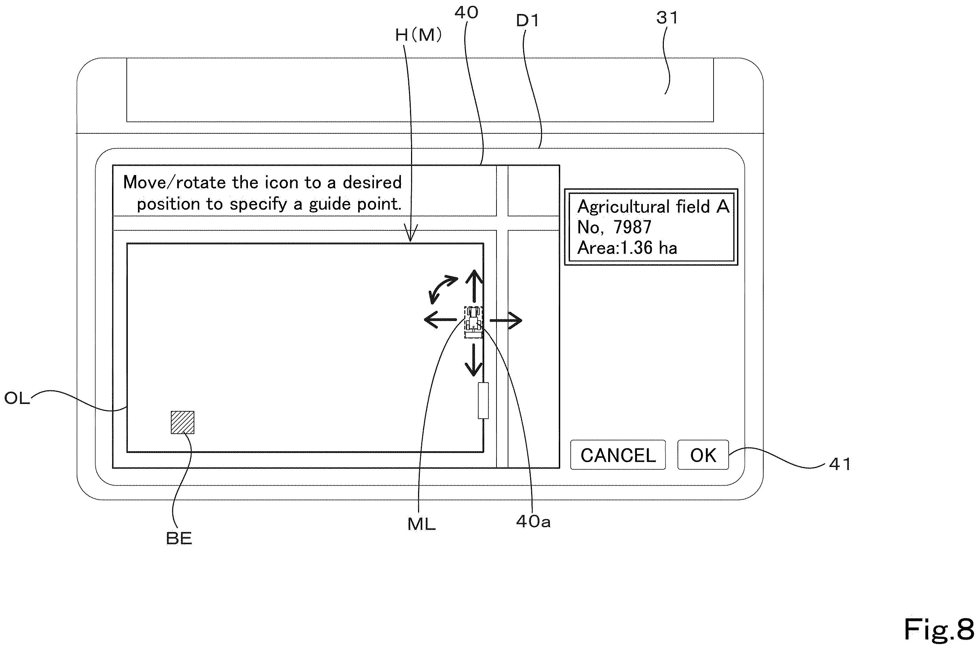

Specifically, the first controller 31 causes the input interface 32 to display a first setting screen D1 to allow setting the position information and orientation information about the guide point IP. FIG. 8 illustrates an example of the first setting screen D1. The first setting screen D1 includes a first field display section 40 indicating the agricultural field map M and a first confirmation button 41. The first field display section 40 indicates the agricultural field map M based on the agricultural field information acquired by the first controller 31. On the agricultural field map M, a first icon 40a that indicates the position of the guide point IP is displayed. The position of the guide point IP and the orientation of the working machine 1 at the guide point IP are specified by the user operating the first icon 40a.

The first icon 40a can be operated to move in up-down and right-left directions and to rotate on the agricultural field map M on the first field display section 40. The first icon 40a is, for example, an arrow-shaped pointer or a top view image representing the working machine 1. In the example illustrated in FIG. 8, the first icon 40a is a top view image representing the working machine 1. The first controller 31 displays the first icon 40a reflecting the type of the working machine 1, the type of the working device 2 coupled to the working machine 1, and the amount of offset, based on the acquired machine information and device information. That is, if the widthwise center of the working device 2 coincides with the widthwise center of the working machine 1 in the width direction, the first icon 40a is also displayed such that the widthwise center of the working device 2 coincides with the widthwise center of the working machine 1 in the width direction. On the contrary, if the widthwise center of the working device 2 deviates from the widthwise center of the working machine 1 in the width direction, the first icon 40a is also displayed such that the widthwise center of the working device 2 deviates from the widthwise center of the working machine 1 in the width direction.

The first icon 40a can be moved within the portion of the first field display section 40 that is within the agricultural field H and that is in the vicinity of the contour OL of the agricultural field H. The first controller 31 sets a movable range of the first icon 40a based on a reference position of the first icon 40a (if the first icon 40a is an arrow icon, the position indicated by the arrow, and, if the first icon 40a is a top view image representing the working machine 1, the vehicle body position VP of the working machine 1 represented by the top view image) and the edge of the agricultural field H.

The first icon 40a may be allowed to move to a position (i) that is within the agricultural field H and that is in the vicinity of the contour OL of the agricultural field H and (ii) to which the working machine 1 can be moved. In this case, the first controller 31 may calculate a contour ML of the working machine 1 in plan view based on the acquired machine information and device information and set the movable range of the first icon 40a based on the contour ML of the working machine 1 and the contour OL (edge) of the agricultural field H.

If the user attempts to move the first icon 40a to the outside of the agricultural field H or to the portion located inward of the vicinity of the contour OL of the agricultural field H, the first controller 31 moves the first icon 40a back to where it was before the movement. Note that the first controller 31 may be configured or programmed to, if the user attempts to move the first icon 40a to the outside of the agricultural field H or to the portion located inward of the vicinity of the contour OL of the agricultural field H, move the first icon 40a to a position that is within the agricultural field H, that is in the vicinity of the contour OL of the agricultural field H, and that is closest to the position to which the user attempted to move the first icon 40a.

If the agricultural field information includes the position information of the off-limits area BE, the first controller 31 may display whether the input interface 32 is allowed to receive a user-specified position of the guide point IP based on the off-limits area BE when the input interface 32 is to receive the user-specified position of the guide point IP on the first setting screen D1. For example, the first controller 31 may set the movable range of the first icon 40a in the region other than the off-limits area BE that is within the agricultural field H and that is in the vicinity of the contour OL of the agricultural field H, based on the off-limits area BE included in the agricultural field information in addition to the edge of the agricultural field H, and display whether the input interface 32 is allowed to receive a user-specified position of the guide point IP. In this case, if the user attempts to move the first icon 40a to the off-limits area BE, the first controller 31 displays an indication that the user-specified position of the guide point IP cannot be received, by moving the first icon 40a back to where it was before the movement.

The first controller 31 need only indicate whether the input interface 32 is allowed to receive a user-specified position of the guide point IP based on the off-limits area BE when the input interface 32 is to receive the user-specified the position of the guide point IP. The first controller 31 may be configured or programmed such that, if the user attempts to move the first icon 40a to the off-limits area BE, a pop-up window or the like indicating that the guide point IP cannot be set in the off-limits area BE is displayed, instead of setting the movable range of the first icon 40a in the region other than the off-limits area BE. The off-limits area BE may be displayed on the agricultural field map M in the first field display section 40.

When the user operates the first confirmation button 41, the input interface 32 receives input of the position of the first icon 40a located on the agricultural field map M at the time when the first confirmation button 41 is operated, as the user-specified position of the guide point IP. The input interface 32 also receives input of the user-specified orientation of the working machine 1 at the guide point IP based on the orientation of the first icon 40a relative to the agricultural field map M at the time when the first confirmation button 41 is operated. The input interface 32 outputs the received position (position information) of the guide point IP and the received orientation information of the working machine 1 to the information definer 31b. The information definer 31b acquires the position information and orientation information about the guide point IP from the input interface 32 and stores the information in association with the identification information of the agricultural field H in the first storing device 33.

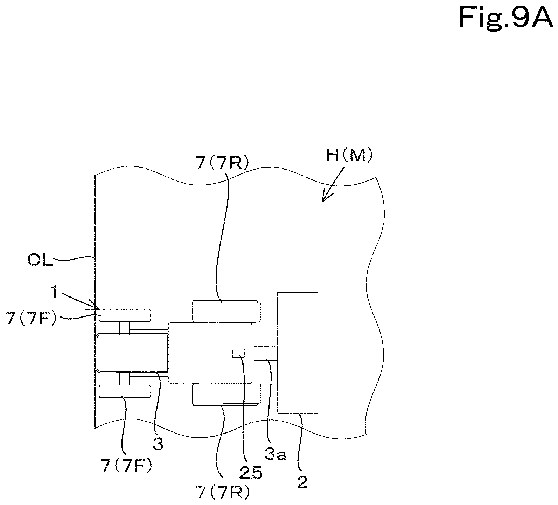

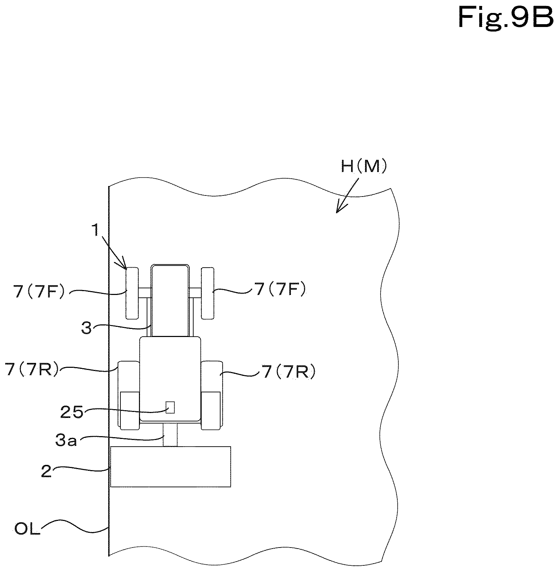

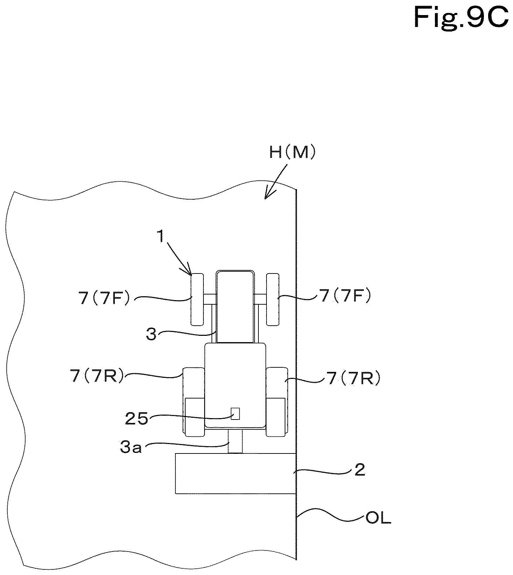

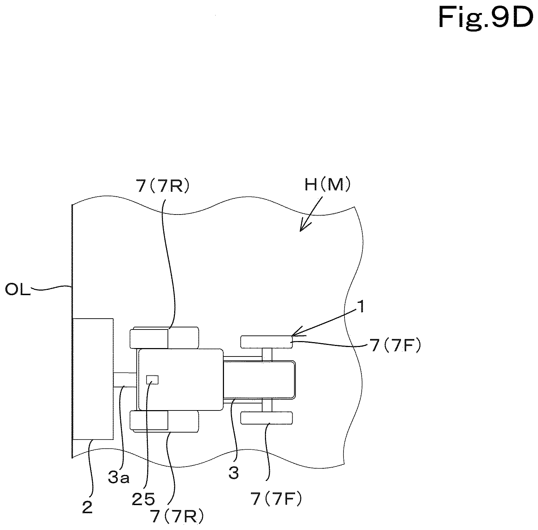

Note that, although the above description discusses an example case where the input interface 32 receives input of a user-specified orientation of the working machine 1 at the guide point IP based on the orientation of the first icon 40a relative to the agricultural field map M at the time when the first confirmation button 41 is operated, the method of setting the orientation of the working machine 1 is not limited to the above-described example. For example, the input interface 32 may receive input of a user-specified orientation of the working machine 1 by receiving a selection of an orientation of the working machine 1 located at the guide point IP relative to the edge of the agricultural field H (an orientation of the working machine 1 relative to the portion of the contour OL of the agricultural field H that is closest to the working machine 1). In this case, the input interface 32 may receive a selection of any of the front-rear and right-left directions or the angle of the working machine 1 relative to the guide point IP as the orientation of the working machine 1 located at the guide point IP relative to the edge of the agricultural field H. FIGS. 9A to 9D each illustrate the orientation of the working machine 1 located at the guide point IP relative to the edge of the agricultural field H. FIG. 9A illustrates a state where the front portion of the working machine 1 faces the edge of the agricultural field H. FIG. 9B illustrates a state where the left portion of the working machine 1 faces the edge of the agricultural field H. FIG. 9C illustrates a state where the right portion of the working machine 1 faces the edge of the agricultural field H. FIG. 9D illustrates a state where the rear portion of the working machine 1 faces the edge of the agricultural field H. The first icon 40a may be automatically moved such that the working machine 1 is located at a position that is within the agricultural field H and that is in the vicinity of the edge of the agricultural field H, based on the selected direction (orientation).

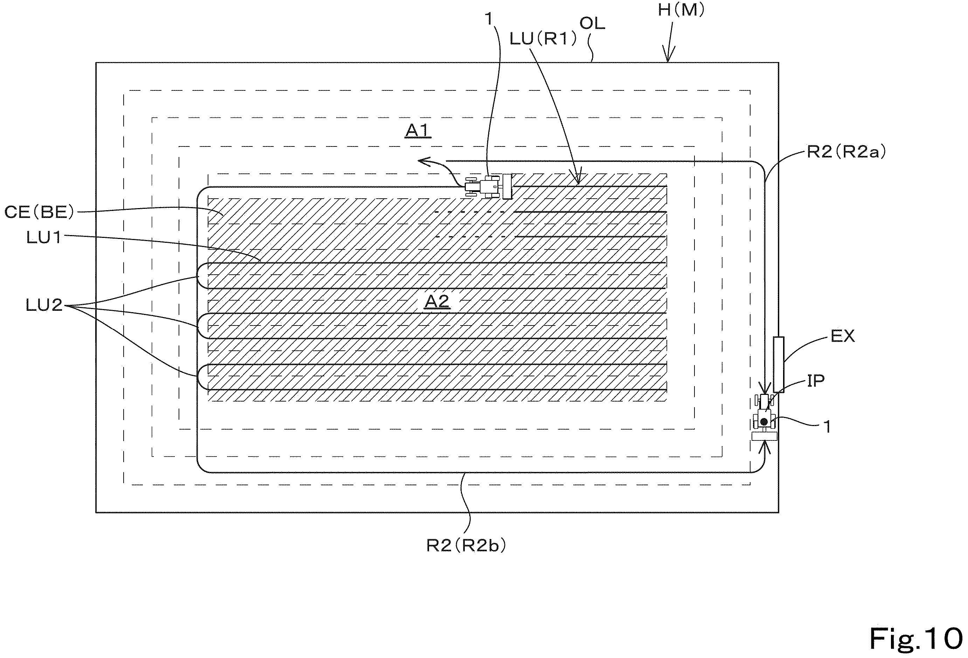

The information definer 31b acquires the vehicle body position VP of the working machine 1 performing the automatic travel in the agricultural field H, generates a guide route R2 to be automatically traveled by the working machine 1 based on the vehicle body position VP and the position information and orientation information about the guide point IP, and defines the guide route R2 as the guide information. FIG. 10 illustrates an example of the guide route R2 generated on the agricultural field map M. As illustrated in FIG. 10, the guide route R2 is a route to be automatically traveled by the working machine 1 from the automatic travel route R1 to the guide point IP and is data represented by latitude and longitude, data represented by coordinates (X-axis, Y-axis), and/or the like.

Note that the automatic travel of the working machine 1 along the guide route R2 may be hereinafter referred to as "guide travel". Specifically, the information definer 31b generates the guide route R2 for the working machine 1 which satisfies at least one guide condition and which is located on the automatic travel route R1 (in the first embodiment, the stopped working machine 1 on the automatic travel route R1) to move to the guide point IP, based on the current vehicle body position VP and vehicle body orientation VD of the working machine 1 satisfying at least one guide condition and based on the position information and orientation information about the guide point IP.

If at least one of the guide conditions is satisfied, the information definer 31b refers to the vehicle body position VP and vehicle body orientation VD acquired from the second controller 20 to acquire the current vehicle body position VP and vehicle body orientation VD of the working machine 1 satisfying the guide condition(s). For example, if the second controller 20 outputs the arrival signal, the abnormality signal, and the request signal, the information definer 31b refers to the vehicle body positions VP and vehicle body orientations VD acquired by the first controller 31 at the predetermined time intervals.

The information definer 31b need only acquire the current vehicle body position VP and vehicle body orientation VD of the working machine 1 satisfying at least one guide condition. When outputting the arrival signal, the abnormality signal, and/or the request signal to the first controller 31, the second controller 20 may output the signal(s) in association with the vehicle body position VP and vehicle body orientation VD to the first controller 31.

The information definer 31b generates the guide route R2 on the agricultural field map M based on the acquired agricultural field information, the current vehicle body position VP and vehicle body orientation VD of the working machine 1, and the position information and orientation information about the guide point IP. The information definer 31b generates the guide route R2 with the simulation of movement of the working machine 1 in the agricultural field H such that the following objective(s) is/are achieved: (P11) the guide route R2 includes no or few multi-point-turn portions where the working machine 1 needs to make a multi-point turn, (P12) if a multi-point-turn portion is to be set, the area inward of the headland region A1 (inner region A2) is given priority over the headland region A1 of the agricultural field H, (P13) the guide route R2 avoids passage through the off-limits area BE where the working machine 1 is prohibited from traveling, (P14) the travel distance (the distance to be traveled by the working machine 1 along the guide route R2 to move from the current position to the guide point IP) and/or the travel time (the time taken for the working machine 1 to move from the current position to the guide point IP along the guide route R2) is as short as possible, and/or the like.

The information definer 31b may generate the guide route R2 using the worked area CE as an off-limits area, instead of or in addition to the off-limits area BE included in the agricultural field information. The information definer 31b acquires the worked area CE stored by the first controller 31 from the first storing device 33 and uses the worked area CE as the off-limits area BE.

In so doing, the information definer 31b may or may not use the worked area CE as the off-limits area BE depending on the content of work done by the working device 2 coupled to the linkage 3a. Specifically, if the working device 2 should be allowed to travel the worked area CE in view of the content of work done by the working device 2, e.g., if the working device 2 coupled to the linkage 3a is a rake, a baler, or the like, the information definer 31b does not use the worked area CE as the off-limits area BE. In this case, the information definer 31b acquires the type of the working machine 1 included in the device information in advance, and determines whether to use the worked area CE as the off-limits area BE. The method performed by the information definer 31b to determine whether to use the worked area CE as the off-limits area BE is not limited to the above-described method, and the user may operate the input interface 32 to set whether to use the worked area CE as the off-limits area BE and the information definer 31b may perform the determination based on the set information.

In the first embodiment, when the information definer 31b is to set a multi-point-turn portion, the information definer 31b sets the multi-point-turn portion in the inner region A2 in priority to the headland region A1 as in the objective (P12). However, for the purpose of achieving the objectives (P13), (P14), and/or the like, the multi-point-turn portion may be set in the headland region A1. In this case, the information definer 31b refers to the headland region A1 generated by the route generator 31a or the headland region A1 in the acquired agricultural field information to determine whether the multi-point-turn portion can be set in the headland region A1. For example, if the width of the headland region A1 (the width in the direction from the inner region A2 toward the outside of the agricultural field H) is relatively narrow and therefore the multi-point-turn portion cannot be set, the information definer 31b does not set the multi-point-turn portion.

In the first embodiment, the information definer 31b generates a guide route R2 (first guide route R2a) generated such that the travel distance is as short as possible as in in the objective (P14), and a guide route R2 (second guide route R2b) generated such that the travel time is as short as possible as in the objective (P14). In so doing, the information definer 31b may simulate the travel time in consideration of the travel speed of the working machine 1 and the time (stopping time) taken for the working machine 1 to switch between forward travel and backward travel. In the first embodiment, the working machine 1 automatically travels at a lower travel speed when traveling backward than when traveling forward. Furthermore, the working machine 1 automatically travels at a lower travel speed when turning than when traveling straight. The information definer 3 1b calculates the travel distance and the travel time for the first guide route R2a and for the second guide route R2b. These pieces of information of the travel speed, the stopping time, and the like are stored in advance in the first storing device 33.

These objectives are examples, and objective(s) other than the above may be prioritized. For example, if the following objective (P15) is satisfied, i.e., if the working device 2 coupled to the linkage 3a is relatively large like a baler or the like and cannot be raised by the linkage 3a, the information definer 31b may generate a guide route R2 that does not include backward travel. In this case, the information definer 31b acquires the type of the working machine 1 included in the device information in advance and determines whether to prioritize the objective (P15). The method performed by the information definer 31b to determine whether to prioritize the objective (P15) is not limited to the above-described method, and the user may operate the input interface 32 to set whether to permit or restrict backward travel in the guide route R2, and the information definer 31b may determine whether to prioritize the objective (P15) based on the set information.

In the example illustrated in FIG. 10, the first guide route R2a is a guide route R2 generated such that (P11) the guide route R2 includes no or few multi-point-turn portions where the working machine 1 needs to make a multi-point turn, (P12) a multi-point-turn portion is set in the area inward of the headland region A1 (inner region A2) in priority to the headland region A1 of the agricultural field H, (P13) the guide route R2 avoids passage through the off-limits area BE where the working machine 1 is prohibited from traveling, and (P14) the travel distance is as short as possible. With the first guide route R2a generated as such, the working machine 1, after making a multi-point turn, travels backward to the guide point IP.

In the example illustrated in FIG. 10, the second guide route R2b is a guide route R2 which detours around the off-limits area BE to the guide point IP such that (P11) the guide route R2 includes no multi-point-turn portions where the working machine 1 needs to make a multi-point turn, (P13) the guide route R2 avoids passage through the off-limits area BE where the working machine 1 is prohibited from traveling, and (P14) the travel time is as short as possible.

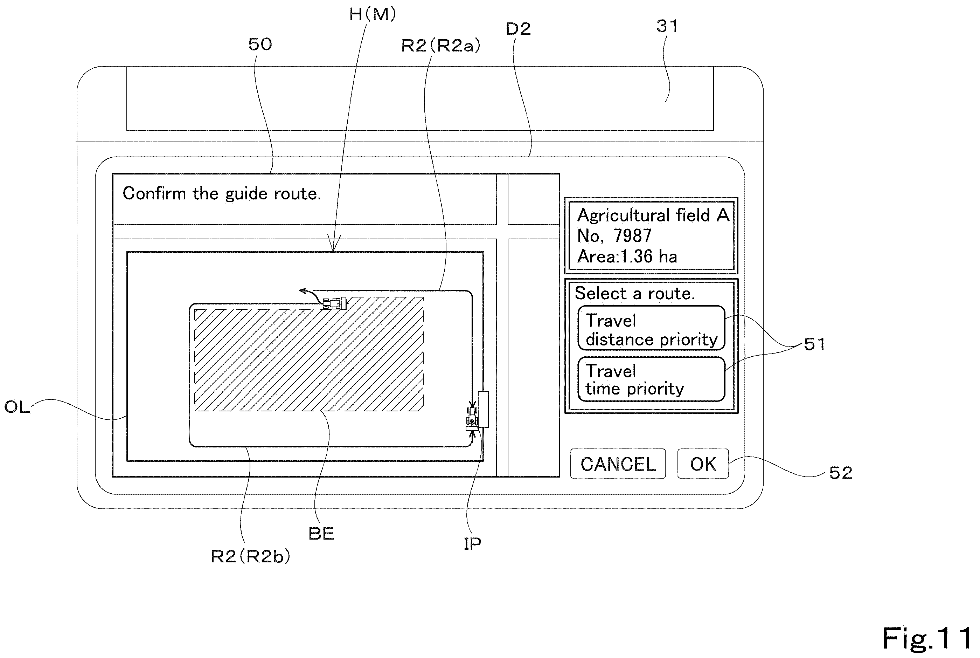

After the information definer 31b generates the guide route(s) R2, the first controller 31 causes the input interface 32 to display a confirmation screen D2 for the user to confirm the guide route(s) R2. FIG. 11 illustrates an example of the confirmation screen D2. As illustrated in FIG. 11, the confirmation screen D2 includes a second field display section 50 indicating the agricultural field map M, selection button(s) 51, and a second confirmation button 52.

The second field display section 50 indicates the agricultural field map M based on the agricultural field information acquired by the first controller 31. On the agricultural field map M, the positions of the guide point IP and guide routes R2 defined by the information definer 31b and the current position of the working machine 1 based on the vehicle body position VP of the working machine 1 acquired from the second controller 20 are displayed. If the information definer 3 1b generates both the first guide route R2a and the second guide route R2b, at least one of the first guide route R2a or the second guide route R2b is displayed on the agricultural field map M.

The information definer 31b defines, as the guide information, one (one guide route R2 (R2a or R2b)) of the first guide route R2a and the second guide route R2b that is selected via the input interface 32. Specifically, in the example illustrated in FIG. 11, if the information definer 31b generates both the first guide route R2a and the second guide route R2b, the confirmation screen D2 initially displays both the first guide route R2a and the second guide route R2b on the agricultural field map M. In the example illustrated in FIG. 11, the off-limits area BE is displayed on the agricultural field map M in the second field display section 50. In the vicinities of the first guide route R2a and the second guide route R2b displayed on the agricultural field map M, the travel distance and travel time for each guide route R2 calculated by the information definer 31b may be displayed.

The selection buttons 51 are operation actuators to be used to, if the information definer 31b generates both the first guide route R2a and the second guide route R2b, select one of the guide routes R2. When the user operates one of the selection buttons 51 to select the first guide route R2a or the second guide route R2b, the guide route R2 selected using the selection button 51 and the unselected guide route R2 are displayed in different manners on the agricultural field map M. For example, the first controller 31 continues displaying the guide route R2 selected using the selection button 51, and hides the unselected guide route R2.

In the example illustrated in FIG. 11, if the information definer 31b generates both the first guide route R2a and the second guide route R2b, the confirmation screen D2 initially displays both the first guide route R2a and the second guide route R2b on the agricultural field map M. Note, however, that the information definer 31b may be configured or programmed such that the first guide route R2a or the second guide route R2b is displayed. If the information definer 31b generates only the first guide route R2a or the second guide route R2b, the input interface 32 does not accept operation on the selection buttons 51, and the generated one of the guide routes R2 is in its selected state.

When the user operates the second confirmation button 52, the input interface 32 receives input of user specification that the guide route R2 selected by the operation on the second confirmation button 52 is the guide information. When the input interface 32 receives input of user specification that the selected guide route R2 is the guide information in response to the operation on the second confirmation button 52, the information definer 31b defines (confirms) the guide route R2 as the guide information. After the definition of the guide information, the information definer 31b outputs the defined guide information to the second controller 20 (working machine 1) via the first communicator 34 and the second communicator 24. Upon receipt of the guide information outputted from the first controller 31 (information definer 31b), the second controller 20 starts automatic travel based on the guide route R2 and the vehicle body position VP and determines whether the vehicle body position VP is at the guide point IP and the orientation corresponding to the orientation information matches the vehicle body orientation VD. If the vehicle body position VP is at the guide point IP and the orientation corresponding to the orientation information matches the vehicle body orientation VD, the second controller 20 controls the transmission 5, the brake 8, the steering device 23, and the like to stop the working machine 1. This allows the working machine 1 to automatically travel along the guide route R2 to move to the guide point IP and to stop at the guide point IP such that the working machine 1 is in the orientation corresponding to the orientation information. Thus, the working machine 1 can stop in the vicinity of the peripheral path at the guide point IP.

Note that the information definer 3 1b performs a redefining process for the guide point IP if (i) at least one of the guide conditions is satisfied, (ii) the guide point IP received by the input interface 32 is located in the off-limits area BE, and/or (iii) the generated guide route(s) R2, i.e., each of the route(s) connecting the current vehicle body position VP and the guide point IP, passes through the off-limits area BE. That is, if the information definer 31b fails to generate a guide route R2 that avoids passage through the off-limits area BE, the information definer 31b performs the redefining process for the guide point IP.

The information definer 31b performs the redefining process including a process (first process) of prompting the user to specify a guide point IP again, and a process (second process) of redefining a guide point IP. The information definer 31b performs the first process including commanding the input interface 32 to display a screen to request specifying a guide point IP again. The information definer 31b commands the input interface 32 to receive re-input of a user-specified guide point IP and defines the guide point IP based on the information (guide point IP) thus received by the input interface 32.

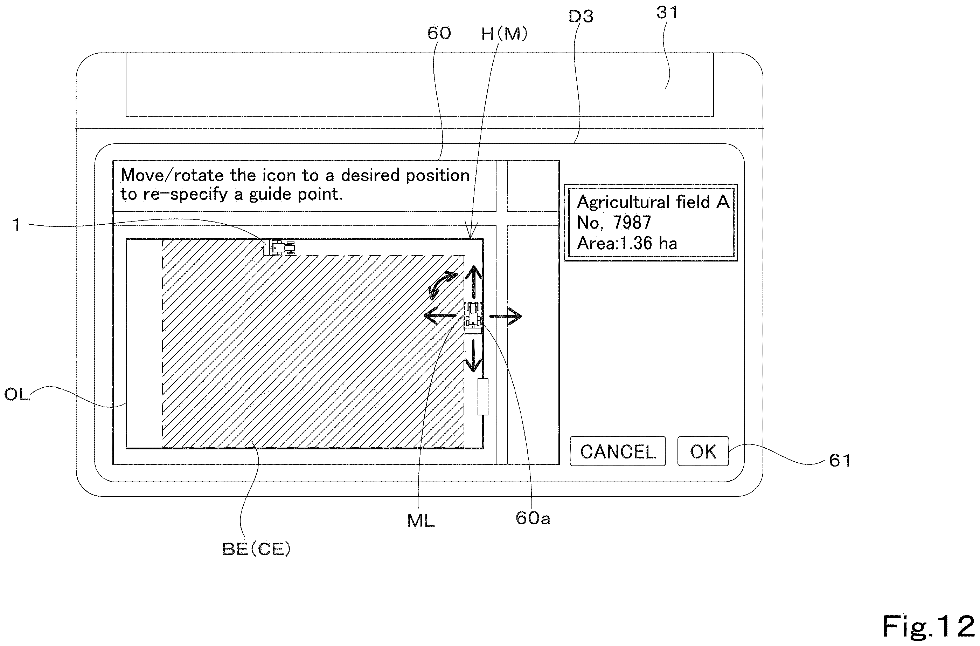

Specifically, if the information definer 31b fails to generate a guide route R2 that avoids passage through the off-limits area BE, the information definer 31b performs the first process and the second process including causing the input interface 32 to display a second setting screen D3 to be used to specify the position information and orientation information about the guide point IP again. FIG. 12 illustrates an example of the second setting screen D3. The second setting screen D3 functions both as a screen to prompt the user to specify a guide point IP again and a screen to be used to redefine the position information and orientation information about the guide point IP, and includes a third field display section 60 indicating the agricultural field map M and a third confirmation button 61 as illustrated in FIG. 12.

In the present embodiment, the second setting screen D3 is similar to the first setting screen D1, the third field display section 60 corresponds to the first field display section 40, and the third confirmation button 61 corresponds to the first confirmation button 41. Thus, similar to the first setting screen D1, when a second icon 60a displayed in the third field display section 60 is moved and/or rotated on the second setting screen D3, the input interface 32 receives input of user-specified position information and orientation information about the guide point IP. Therefore, detailed description of the third field display section 60 and the third confirmation button 61 of the second setting screen D3 is omitted.

In the example illustrated in FIG. 12, the third field display section 60, differently from the first field display section 40, displays the current position of the working machine 1 and the off-limits area BE including the worked area CE on the agricultural field map M.

When the user operates the third confirmation button 61, the input interface 32 receives input of user-specified position information and orientation information about the guide point IP based on the state of the second icon 60a (the position and orientation of the second icon 60a relative to the agricultural field map M) at the time when the third confirmation button 61 is operated. The input interface 32 outputs the received position (position information) of the guide point IP and orientation information of the working machine 1 to the information definer 31b. The information definer 31b generates a guide route R2 based on the position information and orientation information about the guide point IP thus re-specified, the acquired agricultural field information, and the current vehicle body position VP and vehicle body orientation VD of the working machine 1.

If the information definer 31b succeeds in generating a guide route R2 that avoids passage through the off-limits area BE based on the re-specified position information and orientation information about the guide point IP, the first controller 31 causes the input interface 32 to display the confirmation screen D2. On the contrary, if the information definer 31b fails to generate a guide route R2 that avoids passage through the off-limits area BE even based on the re-specified position information and orientation information about the guide point IP, the first controller 31 (information definer 3 1b) causes the input interface 32 to display the second setting screen D3 again.

The above description discusses an example case where, before the working machine 1 automatically travels, the information definer 31b defines the position information and orientation information about the guide point IP in advance. Note, however, that the following configuration may be used. That is, if the working machine 1 automatically travels along the automatic travel route R1 and at least one of the guide conditions is satisfied, i.e., after the start of the automatic travel along the automatic travel route R1 but before the automatic travel based on the guide route R2 (hereinafter may be simply referred to as "before the guide travel"), the information definer 3 1b defines the position information and orientation information about the guide point IP and generates the guide route R2 based on the position information and orientation information about the guide point IP. In this case, if at least one of the guide conditions is satisfied, the first controller 31 causes the input interface 32 to display the second setting screen D3 and the input interface 32 receives input of user-specified position information and orientation information about the guide point IP. In so doing, the second setting screen D3 may display an information display section displaying the content of each guide condition (if the second condition is satisfied, the in-vehicle device(s) in which the abnormality is occurring, the content of the abnormality, and/or the like).

The information definer 31b may be configured or programmed to, before the working machine 1 automatically travels, define in advance the position information and orientation information about the guide point IP for when one or more of the guide conditions are satisfied, and define, before the guide travel, the position information and orientation information about the guide point IP for when the other guide condition(s) are satisfied. For example, the information definer 31b may define the position information and orientation information about the guide point IP for when the first condition is satisfied before the working machine 1 automatically travels, and define the position information and orientation information about the guide point IP for when the other guide condition(s) are satisfied before the guide travel. In other words, the information definer 31b may define the position information and orientation information about the guide point IP for when the first condition is satisfied before the working machine 1 automatically travels, and perform the redefining process for the guide point IP if the other guide condition(s) are satisfied.

### Second Embodiment

The above description of the first embodiment discusses a case where the information definer 31b defines the position information and orientation information about the guide point IP based on manual operation by the user. Note, however, that the information definer 31b may automatically define the position information and orientation information about the guide point IP without relying on manual operation by the user. In this case, when the working machine 1 automatically travels along the automatic travel route R1, if at least one of the guide conditions is satisfied, i.e., before the guide travel, the information definer 31b automatically defines the position information and orientation information about the guide point IP based on information acquired by the first controller 31.

For example, the information definer 31b acquires the current vehicle body position VP and defines the position information of the guide point IP based on the edge of the agricultural field H included in the agricultural field information and the vehicle body position VP. The information definer 31b defines the position information of the guide point IP such that the guide point IP is located at a position which is within the agricultural field H and which is in the vicinity of the contour OL of the agricultural field H and that the distance from the position to the vehicle body position VP is shorter.

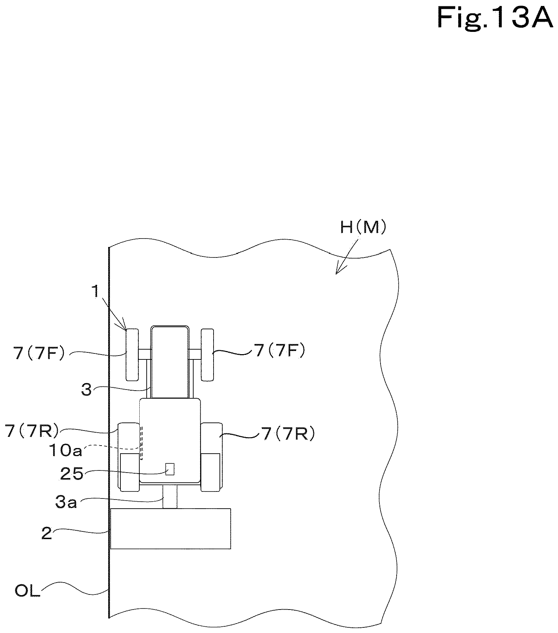

The information definer 31b defines the orientation information based on the orientation of an in-vehicle device of the working machine 1 relative to the edge of the agricultural field H where the working machine 1 performs work. Specifically, the information definer 31b defines the orientation information such that an in-vehicle device of the working machine 1 is directed toward the edge of the agricultural field H or directed away from the edge of the agricultural field H. More specifically, the information definer 31b defines the orientation information such that an in-vehicle device is directed toward the portion of the contour OL of the agricultural field H that is closest to the working machine 1 or directed away from the portion of the contour OL of the agricultural field H that is closest to the working machine 1. FIGS. 13A to 13D each illustrate how to define the orientation information at the guide point IP in the second embodiment.

For example, as illustrated in FIG. 13A, the information definer 31b may define the orientation information such that an entrance/exit 10a of the working machine 1, which is an in-vehicle device of the working machine 1, is directed toward the edge of the agricultural field H. In this case, the working machine 1 stops such that the entrance/exit 10a is directed toward the outside of the agricultural field H at the guide point IP (position close to the peripheral path).

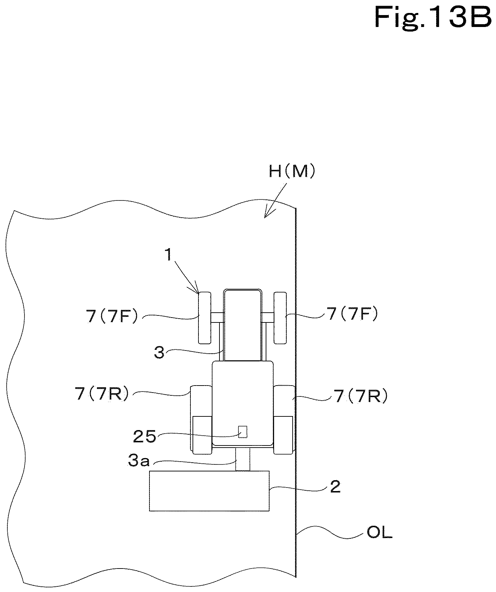

As illustrated in FIG. 13B, the information definer 31b may define, based on the position of the working device 2 attached to the vehicle body 3 of the working machine 1 in an offset manner along the width direction relative to the vehicle body 3 of the working machine 1, the orientation information such that the opposite side of the vehicle body 3 from the side to which the working device 2 is offset relative to the vehicle body 3 faces toward the edge of the agricultural field H (such that the offset working device 2 is positioned away from the edge of the agricultural field H). In this case, the working machine 1 stops at the guide point IP (position close to the peripheral path) such that the opposite side of the vehicle body 3 from the side to which the working device 2 is offset faces toward the outside of the agricultural field H.

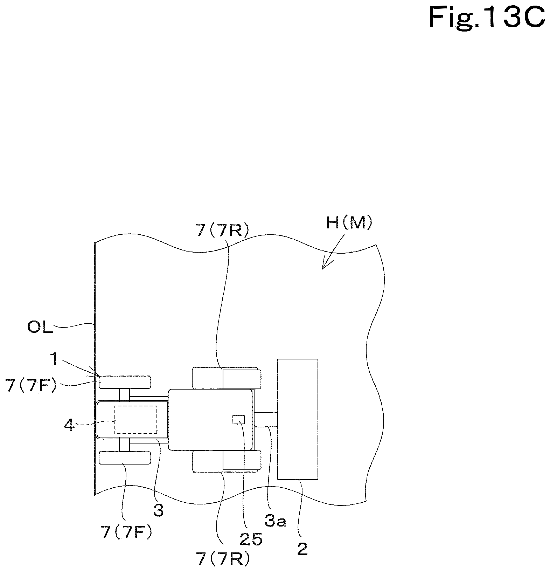

As illustrated in FIG. 13C, the information definer 31b may define the orientation information such that one of in-vehicle device(s) of the working machine 1 in which an abnormality is occurring is directed toward the edge of the agricultural field H (FIG. 13C illustrates a case where an abnormality is occurring in the prime mover 4). In this case, the working machine 1 stops at the guide point IP (close to the peripheral path) such that the in-vehicle device in which the abnormality is occurring is directed toward the outside of the agricultural field H.

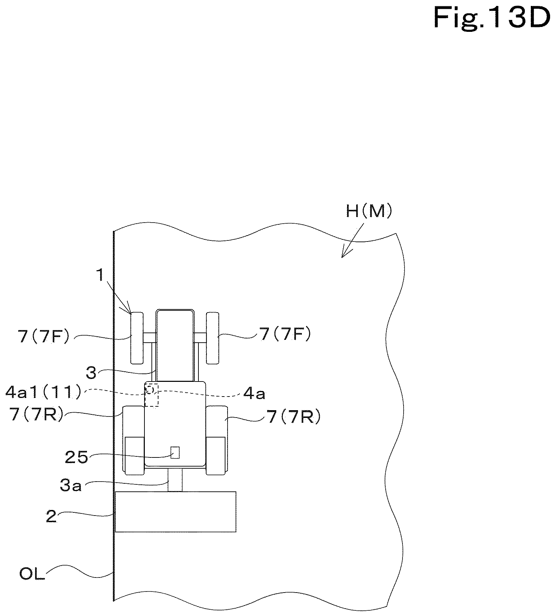

As illustrated in FIG. 13D, the information definer 31b may define the orientation information such that a supply portion 11 to receive supply from an external source is directed toward the edge of the agricultural field H. In this case, the working machine 1 stops at the guide point IP (close to the peripheral path) such that the supply portion 11 is directed toward the outside of the agricultural field H. The supply portion 11 differs depending on the in-vehicle device that needs supply from an external source. For example, if the in-vehicle device that needs supply is the fuel tank 4a, the supply portion 11 is the fuel inlet 4a1. If the in-vehicle device that needs supply is the battery unit, the supply portion 11 is a charging socket. If the in-vehicle device that needs supply is the working device 2, the supply portion 11 is a supply inlet of a tank or a hopper.

The first storing device 33 stores a third management table in which in-vehicle device(s) of the working machine 1 and the position(s) (relative position(s)) of the in-vehicle device(s) in the working machine 1 are associated with each other. The information definer 31b selects an in-vehicle device and refers to the third management table to acquire the position of the in-vehicle device. This allows the information definer 31b to identify the position of the selected in-vehicle device in the working machine 1 and to define the orientation information such that the device is directed toward the edge of the agricultural field H.

The in-vehicle device to be directed toward the edge of the agricultural field H is defined in accordance with the guide condition(s). For example, if the first condition is satisfied, the information definer 3 1b defines the orientation information such that the entrance/exit 10a of the working machine 1 is directed toward the edge of the agricultural field H. In this case, the information definer 31b refers to the third management table, identifies the position of the entrance/exit 10a of the working machine 1, and defines the orientation information such that the entrance/exit 10a is directed toward the edge of the agricultural field H. If a plurality of the entrance/exits 10a of the working machine 1 are located on one (left side) of the opposite sides and the other (right side) of the opposite sides in the width direction of the working machine 1, the information definer 31b need only define the orientation information such that one of the entrance/exits 10a is directed toward the edge of the agricultural field H.

If the second condition is satisfied, the information definer 31b defines the orientation information such that the in-vehicle device in which an abnormality is occurring is directed toward the edge of the agricultural field H. In so doing, the information definer 31b acquires the in-vehicle device in which the abnormality is occurring from the abnormality signal and identifies the position of the in-vehicle device in the working machine 1 from the third management table. This allows the information definer 31b to define the orientation information such that the in-vehicle device in which the abnormality is occurring is directed toward the edge of the agricultural field H.

If the third condition is satisfied, the information definer 31b defines the orientation information such that the supply portion 11 is directed toward the edge of the agricultural field H. In so doing, the information definer 31b acquires the in-vehicle device that needs supply from the request signal and identifies the position of the supply portion 11 corresponding to the in-vehicle device in the working machine 1 from the third management table. This allows the information definer 31b to define the orientation information such that the supply portion 11 is directed toward the edge of the agricultural field H.

Note that the above-described combinations of each guide condition and the method of defining the orientation information based on the orientation of the device relative to the agricultural field H are examples, and do not imply any limitation.

For example, if the first condition is satisfied and the working device 2 is not offset relative to the vehicle body 3, the information definer 31b may define the orientation information such that the entrance/exit 10a of the working machine 1 is directed toward the edge of the agricultural field H, and, if the first condition is satisfied and the working device 2 is offset relative to the vehicle body 3, the information definer 31b may define the orientation information such that the opposite side of the vehicle body 3 from the side to which the working device 2 is offset relative to the vehicle body 3 faces toward the edge of the agricultural field H.

The information definer 31b of the second embodiment is configured or programmed to, in setting the position of the guide point IP, give priority to directing the in-vehicle device corresponding to the guide condition toward the edge of the agricultural field H over bringing the guide point IP closer to the current vehicle body position VP. That is, the information definer 31b sets the position of the guide point IP at a position which is within the agricultural field H and in the vicinity of the contour OL of the agricultural field H, at which the in-vehicle device corresponding to the guide condition can be directed toward the edge of the agricultural field H, and which is closer to the current vehicle body position VP.

Specifically, the information definer 31b, in defining the position information and orientation information about the guide point IP, generates the guide route R2 with the simulation of movement of the working machine 1 in the agricultural field H and sets the position of the guide point IP. More specifically, the information definer 31b generates the guide route R2 with the simulation of movement of the working machine 1 in the agricultural field H while setting the position information and orientation information about the guide point IP and the guide route R2 such that the following objectives are achieved: (P21) the position of the guide point IP is set at a position that is within the agricultural field H and that is in the vicinity of the contour OL of the agricultural field H, (P22) the position of the guide point IP is set at a position where the in-vehicle device corresponding to the guide condition can be directed toward the edge of the agricultural field H, (P23) the position of the guide point IP is set at a position closer to the current vehicle body position VP, (P24) the guide route R2 includes no or few multi-point-turn portions where the working machine 1 needs to make a multi-point turn, (P25) if a multi-point-turn portion is set, the multi-point-turn portion is set in the inner region A2 in priority to the headland region A1 of the agricultural field H, (P26) the guide route R2 avoids passage through the off-limits area BE where the working machine 1 is prohibited from traveling, (P27) the travel distance and/or the travel time is/are as short as possible, and/or the like.

These objectives are examples, and objective(s) other than the above may be prioritized. For example, similar to (P15), the information definer 31b may generate a guide route R2 that does not include backward travel.

Similar to the first embodiment, the information definer 31b of the second embodiment may generate a guide route R2 using the worked area CE as an off-limits area, instead of or in addition to the off-limits area BE included in the agricultural field information. The information definer 31b acquires the worked area CE from the first storing device 33 and uses the worked area CE as the off-limits area BE. In so doing, the information definer 31b may or may not use the worked area CE as the off-limits area BE depending on the content of work done by the working device 2 coupled to the linkage 3a.

Also in the second embodiment, the information definer 31b generates at least a first guide route R2a or a second guide route R2b as in the objective (P27). In generating the first guide route R2a and the second guide route R2b, the information definer 31b may define the position information and orientation information about the guide point IP which differ between the first guide route R2a and the second guide route R2b. In the case where the information definer 31b defines the position information and orientation information about the guide point IP which are common to the first guide route R2a and the second guide route R2b, if one of the first guide route R2a and the second guide route R2b is a guide route R2 that cannot avoid passage through the off-limits area BE, the information definer 31b need only generate the other guide route R2.

Similar to the first embodiment, after the information definer 31b generates the guide route(s) R2, the first controller 31 causes the input interface 32 to display the confirmation screen D2 for the user to confirm the guide route R2. Thus, in the second embodiment, description of the confirmation screen D2 and description of the flow after the confirmation screen D2 is displayed on the input interface 32 are omitted.

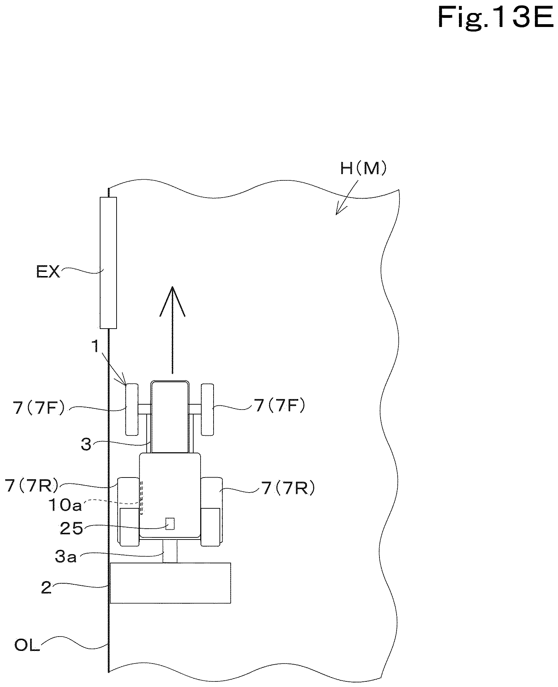

In the above description, the information definer 31b defines the orientation of the in-vehicle device of the working machine 1 relative to the agricultural field H where the working machine 1 performs work, as the orientation information. Note, however, that irrespective of the position of the in-vehicle device, the information definer 31b may define the orientation information such that the direction of travel of the working machine 1 is oriented toward an entrance/exit EX of the agricultural field H as illustrated in FIG. 13E. Specifically, for example, if the first condition is satisfied, the information definer 31b defines the orientation information such that the direction of travel of the working machine 1 is oriented toward the entrance/exit EX of the agricultural field H. In this case, the information definer 31b refers to the agricultural field information to acquire the position information of the entrance/exit EX of the agricultural field H from the agricultural field map M included in the agricultural field information. The direction of travel of the working machine 1 is, for example, the forward direction.

In so doing, the information definer 3 1b generates the guide route R2 with the simulation of movement of the working machine 1 in the agricultural field H while setting the position information and orientation information about the guide point IP and the guide route R2 such that the following objectives are achieved: (P21) the position of the guide point IP is set at a position that is within the agricultural field H and that is in the vicinity of the contour OL of the agricultural field H, (P28) the position of the guide point IP is set at a position where the direction of travel (forward direction) of the working machine 1 can be directed to the entrance/exit EX of the agricultural field H, (P23) the position of the guide point IP is set at a position closer to the current vehicle body position VP, (P24) the guide route R2 includes no or few multi-point-turn portions where the working machine 1 needs to make a multi-point turn, (P25) if a multi-point-turn portion is set, the multi-point-turn portion is set in the inner region A2 in priority to the headland region A1 of the agricultural field H, (P26) the guide route R2 avoids passage through the off-limits area BE where the working machine 1 is prohibited from traveling, (P27) the travel distance and/or the travel time is/are as short as possible, and/or the like.

The information definer 31b may be configured or programmed to, if the second condition is satisfied in addition to or instead of the first condition, define the orientation information such that the direction of travel of the working machine 1 is oriented toward the entrance/exit EX of the agricultural field H, depending on the content of the abnormality (the degree of the abnormality) in the second condition. In this case, the information definer 3 1b may be configured or programmed to, if the degree of the abnormality is relatively high, define the orientation information such that the direction of travel of the working machine 1, instead of the device in which the abnormality is occurring, is oriented toward the entrance/exit EX of the agricultural field H. Note, however, that the information definer 31b may be configured or programmed to, if the degree of the abnormality is relatively low, define the orientation information such that the direction of travel of the working machine 1, instead of the in-vehicle device in which the abnormality is occurring, is oriented toward the entrance/exit EX of the agricultural field H. The method of defining the orientation information at the guide point IP in accordance with the content of the abnormality is not limited to the above-described examples.

The information definer 31b may be configured or programmed to, if the second condition is satisfied, define the orientation information such that the entrance/exit 10a of the working machine 1, instead of the device in which the abnormality is occurring, is oriented toward the edge of the agricultural field H, depending on the content of the abnormality in the second condition.

The above description of the second embodiment discusses cases where the information definer 31b defines, in accordance with the guide condition(s), the orientation information in accordance with the positional relationship between the in-vehicle device of the working machine 1 and the edge of the agricultural field H or defines the orientation information in accordance with the positional relationship between the direction of travel of the working machine 1 and the entrance/exit EX of the agricultural field H. Note, however, that the information definer 3 1b may be configured or programmed to define the orientation information simply based on the orientation of the working machine 1 relative to the agricultural field H. In this case, the input interface 32 receives a selection of the orientation of the working machine 1 at the guide point IP relative to the edge of the agricultural field H, and receives input of user-specified orientation of the working machine 1. The input interface 32 may receive a selection of one of the front-rear and right-left directions (as illustrated in FIGS. 9A to 9D) and/or the angle of the working machine 1 relative to the guide point IP, as the orientation of the working machine 1 at the guide point IP relative to the edge of the agricultural field H. The input interface 32 may receive a user-specified orientation of the working machine 1 relative to the agricultural field H before the automatic travel starts or before the guide travel starts.

In so doing, the information definer 3 1b generates the guide route R2 with the simulation of movement of the working machine 1 in the agricultural field H while setting the position information and orientation information about the guide point IP and the guide route R2 such that the following objectives are achieved: (P21) the position of the guide point IP is set at a position that is within the agricultural field H and that is in the vicinity of the contour OL of the agricultural field H, (P29) the position of the guide point IP is set at a position where the working machine 1 can be directed to the edge of the agricultural field H based on the orientation of the working machine 1 relative to the agricultural field H received by the input interface 32, (P23) the position of the guide point IP is set at a position closer to the current vehicle body position VP, (P24) the guide route R2 includes no or few multi-point-turn portions where the working machine 1 needs to make a multi-point turn, (P25) if a multi-point-turn portion is set, the multi-point-turn portion is set in the inner region A2 in priority to the headland region A1 of the agricultural field H, (P26) the guide route R2 avoids passage through the off-limits area BE where the working machine 1 is prohibited from traveling, (P27) the travel distance and/or the travel time is/are as short as possible, and/or the like.

If the input interface 32 receives a user-specified orientation of the working machine 1 relative to the agricultural field H before the automatic travel starts and the information definer 31b cannot set a guide route R2, the information definer 31b performs the redefining process including commanding the input interface 32 to re-specify an orientation of the working machine 1 relative to the agricultural field H, and the user performs operation to re-specify the orientation of the working machine 1 relative to the agricultural field H. In this case, the information definer 31b generates the guide route R2 with the simulation of movement of the working machine 1 in the agricultural field H while determining the orientation of the working machine 1 relative to the agricultural field H with which the guide route R2 can be generated such that the above-described objectives (P21), (P29), and/or (P23) to (P27) can be achieved. The input interface 32 does not receive a selection of the orientation of the working machine 1 relative to the agricultural field H that is not settable, and displays an indication that the orientation cannot be selected.

If the input interface 32 receives a user-specified orientation of the working machine 1 relative to the agricultural field H before the guide travel starts, the input interface 32 does not receive the user-specified orientation of the working machine 1 relative to the agricultural field H if it is not settable, and displays an indication that the orientation cannot be selected.

In the above-described second embodiment, unlike the first embodiment, the position information and orientation information about the guide point IP are automatically defined without relying on manual operation by the user. Note, however, that the work assistance device 30 of the first embodiment and the work assistance device 30 of the second embodiment may be combined. For example, the information definer 31b may define the position information and orientation information about the guide point IP based on manual operation before the automatic travel starts as in the first embodiment and, if an abnormality occurs in the working machine 1, automatically redefine the guide point IP before the guide travel starts as in the second embodiment.

### Third Embodiment

The above description of the first embodiment discusses the case where the information definer 31b defines the position information and orientation information about the guide point IP based on manual operation by the user, and the above description of the second embodiment discusses the case where the information definer 31b automatically defines the position information and orientation information about the guide point IP without relying on manual operation by the user. Note, however, that the information definer 31b may be configured or programmed such that a condition based on which the position information of the guide point IP is defined is specified in advance by manual operation by the user and that the information definer 31b automatically defines the position information and orientation information about the guide point IP based on the condition before the guide travel. In this case, the input interface 32 receives input of a user-specified portion of the contour OL of the agricultural field H where the working machine 1 performs work. The information definer 31b defines the position information of the guide point IP such that the position of the guide point IP is set in the vicinity of the user-specified portion of the contour OL received by the input interface 32.

The information definer 31b of the third embodiment need only automatically define the orientation information at the guide point IP, and the orientation information may be defined in the following manner, as described in the second embodiment. That is, the orientation information may be defined such that an in-vehicle device of the working machine 1 is oriented toward the edge of the agricultural field H, the orientation information may be defined based on the direction of travel of the working machine 1 and on the entrance/exit EX of the agricultural field H, and/or the orientation information may be defined based on the orientation, specified via the input interface 32, of the working machine 1 relative to the agricultural field H. Thus, in the following description, detailed description of the definition of the orientation information is omitted, and the definition of the position information is described in detail.

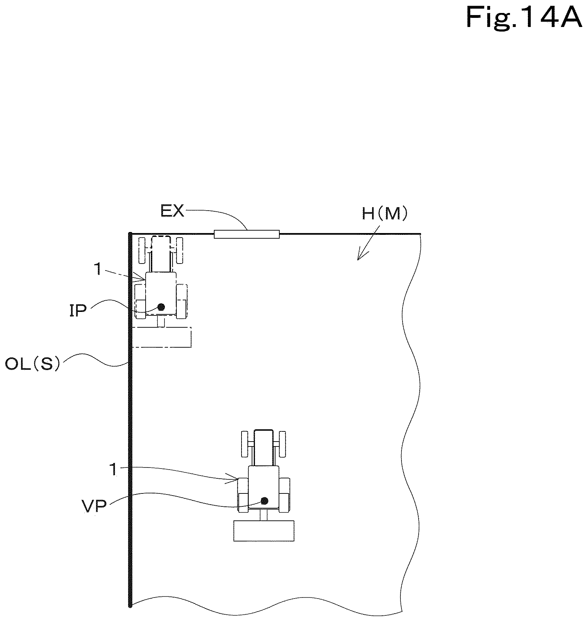

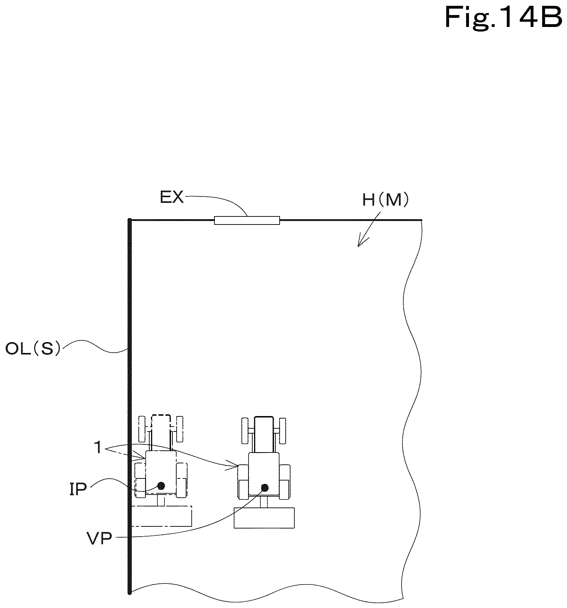

The information definer 31b of the third embodiment defines, as the guide point IP, a position (i) which is in the vicinity of the user-specified portion of the contour OL received by the input interface 32 and (ii) which is closest to the entrance/exit EX and/or at which the travel distance and/or travel time from the current vehicle body position VP to the position is the shortest. The information definer 31b may define the position of the guide point IP in accordance with guide condition(s). FIGS. 14A and 14B illustrate the definition of the position information of the guide point IP in the third embodiment. FIG. 14A illustrates an example in which the information definer 31b defines the position of the guide point IP if the first condition is satisfied, and FIG. 14B illustrates an example in which the information definer 31b defines the position of the guide point IP if the second condition and/or the third condition is/are satisfied. FIGS. 14A and 14B illustrate cases in which the off-limits area BE and the current vehicle body position VP are the same in the same agricultural field H. In FIGS. 14A and 14B, the user-specified portion of the contour OL received by the input interface 32 is represented by a thicker line than the other portions.

For example, if the first condition is satisfied, the information definer 31b defines the position of the guide point IP at a position that is in the vicinity of the user-specified portion of the contour OL received by the input interface 32 and that is closest to the entrance/exit EX, as illustrated in FIG. 14A. If the second condition and/or the third condition is/are satisfied, the information definer 31b defines, as the position of the guide point IP, a position which is in the vicinity of the user-specified portion of the contour OL received by the input interface 32 and at which the travel distance and/or travel time from the current vehicle body position VP to the position is the shortest, as illustrated in FIG. 14B. For convenience of description, description of the definition of the guide point IP performed by the information definer 31b when the third condition is satisfied will be omitted below.

The above-described combinations of the guide condition(s) and the position settings of the guide point IP are merely examples, and, for example, the position of the guide point IP may be changed in accordance with the content of the abnormality (the degree of the abnormality). In this case, if the degree of the abnormality is relatively high, the information definer 31b may define the position of the guide point IP at a position that is in the vicinity of the user-specified portion of the contour OL received by the input interface 32 and that is closest to the entrance/exit EX, instead of a position where the travel distance and/or travel time from the current vehicle body position VP to the position is the shortest. Note, however, that the information definer 31b may, even if the degree of the abnormality is relatively low, define the position of the guide point IP at a position that is in the vicinity of the user-specified portion of the contour OL received by the input interface 32 and that is closest to the entrance/exit EX instead of a position where the travel distance and/or travel time from the current vehicle body position VP to the position is the shortest. The method of defining the position of the guide point IP based on the content of the abnormality is not limited to the above-described method.

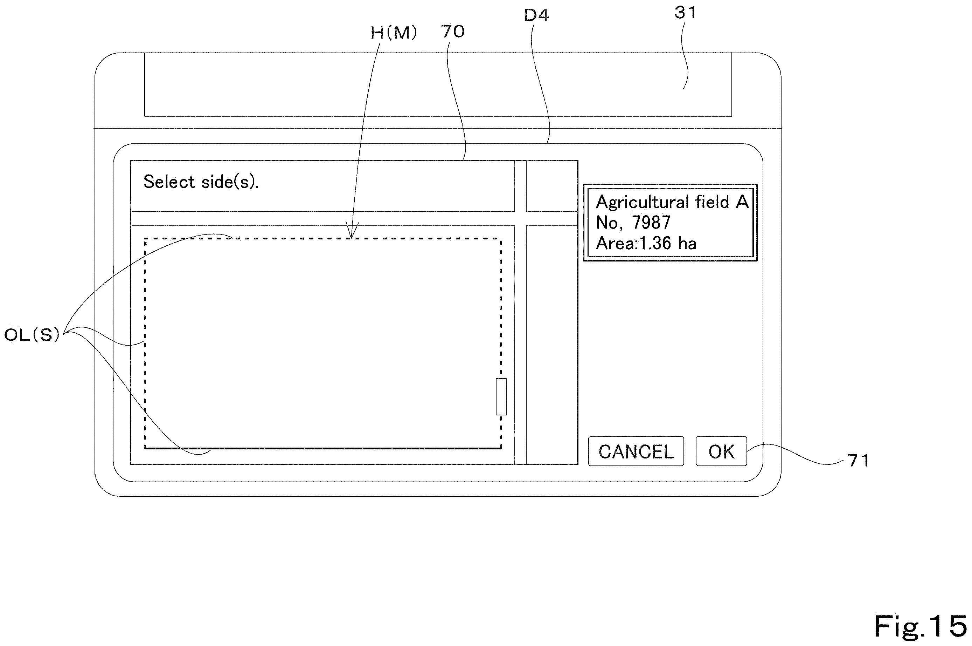

In the third embodiment, the input interface 32 receives a selection of one or more sides S of the contour OL of the agricultural field H where the working machine 1 performs work, as the portion of the contour OL of the agricultural field H. Specifically, the first controller 31 causes the input interface 32 to display a third setting screen D4 used to select the one or more sides S of the contour OL of the agricultural field H. FIG. 15 illustrates an example of the third setting screen D4. As illustrated in FIG. 15, the third setting screen D4 includes a fourth field display section 70 indicating the agricultural field map M and a fourth confirmation button 71. The fourth field display section 70 indicates the agricultural field map M based on the agricultural field information acquired by the first controller 31. On the agricultural field map M, the contour OL of the agricultural field H may be displayed in an emphasized manner in comparison to the other portions, and each side S of the contour OL is selectable. The user performs operation to select a side S to switch between the selected state and the unselected state of the side S. The side S in the selected state and the side S in the unselected state are displayed in different manners. For example, the side S in the selected state is displayed in a blinking manner, which differs from the side S in the unselected state (in the example in FIG. 15, the side S in the selected state is represented by a solid line, and the sides S in the unselected state are represented by broken lines).

When the user operates the fourth confirmation button 71, the input interface 32 receives input of, as user-specified side(s) S (i.e., selected side(s) S) of the contour OL of the agricultural field H, the side(s) S in the selected state at the time when the fourth confirmation button 71 is operated. The information definer 31b acquires information (identification information) of the selected one or more sides S from the input interface 32, and stores the information in association with the identification information of the agricultural field H in the first storing device 33.

The above description discusses an example case where the input interface 32 receives input of user-specified one or more sides S (a selection one or more sides S) based on the side(s) S in the selected state at the time when the fourth confirmation button 71 is operated. Note, however, that the method of selecting side(s) S of the contour OL of the agricultural field H is not limited to the above-described example. For example, the input interface 32 may be operable to display a list of the sides S of the contour OL of the agricultural field H on the third setting screen D4 and the user may perform operation to select one or more sides S from the list.

The information definer 31b, after acquiring the position information of the entrance/exit EX of the agricultural field H from the agricultural field information, acquiring the arrival signal, and determining that the working machine 1 has completed work in the agricultural field H, defines, as the guide point IP, a position that is in the vicinity of the user-specified one or more sides S received by the input interface 32 and that is closest to the entrance/exit EX. Additionally or alternatively, the information definer 31b acquires the current vehicle body position VP (the vehicle body position VP of the working machine 1 automatically traveling in the agricultural field H), and, if the information definer 31b acquires the abnormality signal (if an abnormality occurs in the working machine 1), the information definer 31b defines, as the guide point IP, a position which is in the vicinity of the user-specified one or more sides S received by the input interface 32 and at which the travel distance and/or travel time from the vehicle body position VP at the time when the abnormality occurred to the position is the shortest. In this case, the information definer 31b defines the position information and orientation information about the guide point IP based on the acquired agricultural field information, the current vehicle body position VP and vehicle body orientation VD of the working machine 1, and the position information of the selected one or more sides S.

Specifically, the information definer 31b, in defining the position information and orientation information about the guide point IP, generates the guide route R2 with the simulation of movement of the working machine 1 in the agricultural field H and sets the position of the guide point IP. Specifically, the information definer 31b generates the guide route R2 with the simulation of movement of the working machine 1 in the agricultural field H while setting the position information and orientation information about the guide point IP and the guide route R2 such that the following objectives are achieved: (P31) if the first condition is satisfied, the position of the guide point IP is set at a position that is in the vicinity of the selected one or more sides S and that is closer to the entrance/exit EX of the agricultural field H, and, if the second condition is satisfied, the position of the guide point IP is set at a position that is in the vicinity of the selected one or more sides S and that is closer to the current vehicle body position VP of the working machine 1, (P32) the position of the guide point IP is set at a position where the in-vehicle device corresponding to the guide condition can be directed toward the edge of the agricultural field H, (P33) the guide route R2 includes no or few multi-point-turn portions where the working machine 1 needs to make a multi-point turn, (P34) if a multi-point-turn portion is set, the multi-point-turn portion is set in the inner region A2 in priority to the headland region A1 of the agricultural field H, (P35) the guide route R2 avoids passage through the off-limits area BE where the working machine 1 is prohibited from traveling, (P36) the travel distance and/or the travel time is/are as short as possible, and/or the like.

These objectives are examples, and objective(s) other than the above may be prioritized. For example, similar to (P15), the information definer 31b may generate a guide route R2 that does not include backward travel.

Similar to the first embodiment, the information definer 3 1b of the third embodiment may generate a guide route R2 using the worked area CE as an off-limits area instead of or in addition to the off-limits area BE included in the agricultural field information. The information definer 31b acquires the worked area CE from the first storing device 33 and uses the worked area CE as the off-limits area BE. In so doing, the information definer 31b may or may not use the worked area CE as the off-limits area BE depending on the content of work done by the working device 2 coupled to the linkage 3a.

Also in the third embodiment, the information definer 3 1b generates at least one of a first guide route R2a or a second guide route R2b as in the objective (P36). In generating the first guide route R2a and the second guide route R2b, the information definer 3 1b may define the position information and orientation information about the guide point IP which differ between the first guide route R2a and the second guide route R2b. In the case where the information definer 31b defines the position information and orientation information about the guide point IP which are common to the first guide route R2a and the second guide route R2b, if one of the first guide route R2a and the second guide route R2b is a guide route R2 that cannot avoid passage through the off-limits area BE, the information definer 31b need only generate the other guide route R2.

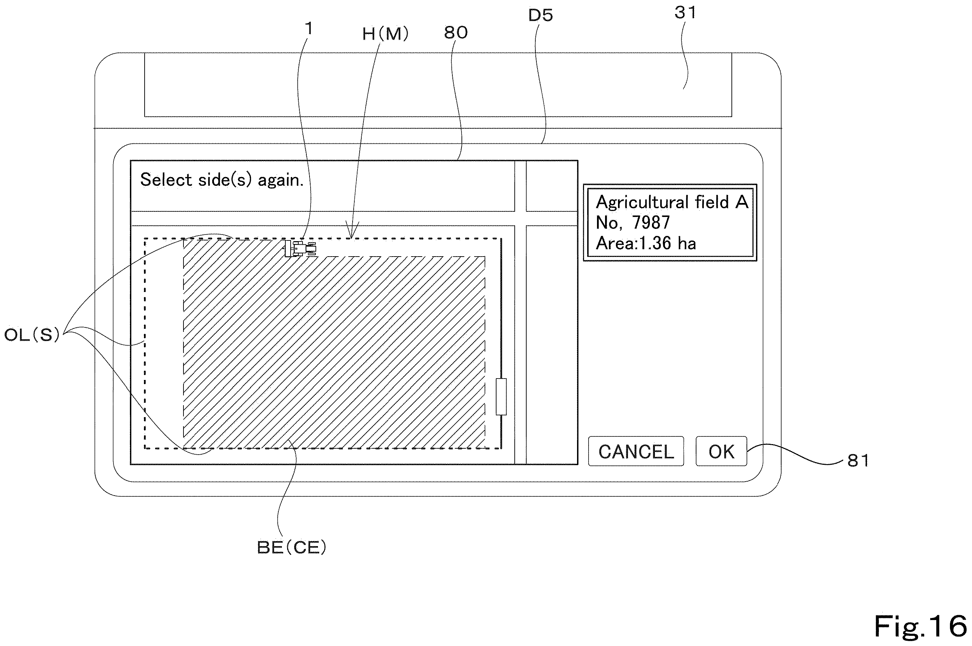

If the information definer 3 1b cannot generate a guide route R2 avoiding passage through the off-limits area BE, the first controller 31 causes the input interface 32 to display a fourth setting screen D5 to be used to re-select (re-specify) side(s) S of the contour OL of the agricultural field H to enable generation of a guide route R2. FIG. 16 illustrates an example of the fourth setting screen D5.

As illustrated in FIG. 16, the fourth setting screen D5 allows re-selection of side(s) S of the agricultural field H and includes a fifth field display section 80 indicating the agricultural field map M and a fifth confirmation button 81. In the present embodiment, the fourth setting screen D5 is similar to the third setting screen D4, the fifth field display section 80 corresponds to the fourth field display section 70, and the fifth confirmation button 81 corresponds to the fourth confirmation button 71. Thus, similar to the third setting screen D4, when side(s) S of the agricultural field H displayed in the fifth field display section 80 is/are selected on the fourth setting screen D5, the input interface 32 receives input of the user-specified side(s) S of the agricultural field H. In this case, the information definer 31b generates a guide route R2 with the simulation of movement of the working machine 1 in the agricultural field H while determining the side(s) S of the agricultural field H where the guide point IP, based on which the guide route R2 can be generated, can be set so that the objective(s) (P31) to (P36) can be achieved. The input interface 32 does not receive a selection of unselectable side(s) S of the agricultural field H and displays an indication that the side(s) is/are not allowed to be selected. When the user operates the fifth confirmation button 81, the input interface 32 receives input of, as the selected side(s) S, the side(s) S of the contour OL of the agricultural field H in the selected state at the time when the fifth confirmation button 81 is operated. With this, the information definer 3 1b defines the position information and the orientation information about the guide point IP and the guide route R2 that can achieve the objective(s) (P31) to (P36).

In the example illustrated in FIG. 16, the fifth field display section 80 displays the current position of the working machine 1 and the off-limits area BE including the worked area CE on the agricultural field map M, differently from the fourth field display section 70.

Similar to the first embodiment, after the information definer 31b generates the guide route R2, the first controller 31 causes the input interface 32 to display the confirmation screen D2 to allow the user to confirm the guide route R2. Thus, in the third embodiment, description of the confirmation screen D2 and description of the flow after the confirmation screen D2 is displayed on the input interface 32 are omitted.

Example embodiments (first to third embodiments) of the present invention provide work assistance devices 30, working machines 1, and work assisting methods described in the following items.

(Item 1) A work assistance device 30 including an input interface 32 to receive input of user-specified information, and a first controller 31 configured or programmed to acquire the information received by the input interface 32 and information relating to an agricultural field H in which a working machine 1 performs work, the working machine 1 being operable to perform automatic travel, wherein the first controller 31 is configured or programmed to define, based on the acquired information, guide information including (i) position information of a guide point IP for the working machine 1 to be guided from an automatic travel route R1 to a predetermined position, the automatic travel route R1 being a route to be automatically traveled by the working machine 1 in the agricultural field H and (ii) orientation information indicating an orientation of the working machine 1 at the guide point IP, and output the guide information to the working machine 1.

The work assistance device 30 according to item 1 makes it possible not only to move the working machine 1 that is performing the automatic travel or the working machine 1 that has performed the automatic travel to a desired position but also to direct such a working machine 1 in a desired orientation. This allows the user to take appropriate actions relating to the working machine 1.

(Item 2) The work assistance device 30 according to item 1, wherein the position information of the guide point IP is information based on which the working machine 1 is to be guided to a position different from points on the automatic travel route R1.

The work assistance device 30 according to item 2 makes it possible not only to move the working machine 1 from the automatic travel route R1 to a desired position but also to direct the working machine 1 in a desired orientation. This allows the user to take appropriate actions relating to the working machine 1.

(Item 3) The work assistance device 30 according to item 1 or 2, wherein the input interface 32 is operable to receive input of a user-specified position of the guide point IP.

The work assistance device 30 according to item 3 allows the user to specify a desired position as the guide point IP.

(Item 4) The work assistance device 30 according to item 3, wherein the input interface 32 is operable to receive input of, as the guide point IP, a user-specified position that is within the agricultural field H in which the working machine 1 performs work and that is in a vicinity of a contour OL of the agricultural field H.

The work assistance device 30 according to item 4 allows the user to move the working machine 1 that is performing the automatic travel or the working machine 1 that has performed the automatic travel to the vicinity of the contour OL of the agricultural field H. Thus, irrespective of the travel route for the automatic travel of the working machine 1, the user can move to the working machine 1 without moving in the agricultural field H.

(Item 5) The work assistance device 30 according to item 3 or 4, wherein the first controller 31 is configured or programmed to acquire an off-limits area BE of the agricultural field H, the off-limits area (BE) being an area where the working machine 1 is prohibited from traveling, and, when the input interface 32 is to receive the user-specified position of the guide point IP, cause the input interface 32 to display whether the input interface 32 is allowed to receive the user-specified position of the guide point IP based on the off-limits area BE.

The work assistance device 30 according to item 5 allows the user to certainly know whether the guide point IP can be set, making it possible to eliminate or reduce the likelihood that the working machine 1 will enter the off-limits area BE.

(Item 6) The work assistance device 30 according to item 3 or 4, wherein the first controller 31 is configured or programmed to acquire an off-limits area BE of the agricultural field H, the off-limits area BE being an area where the working machine 1 is prohibited from traveling, and, when the guide point IP received by the input interface 32 is located in the off-limits area BE, perform a redefining process for the guide point IP.

The work assistance device 30 according to item 6 makes it possible to eliminate or reduce the likelihood that the working machine 1 will enter the off-limits area BE.

(Item 7) The work assistance device 30 according to item 3 or 4, wherein the first controller 31 is configured or programmed to acquire an off-limits area BE of the agricultural field H, the off-limits area BE being an area where the working machine 1 is prohibited from traveling, acquire a vehicle body position VP of the working machine 1 performing the automatic travel in the agricultural field H, and, if each of one or more routes connecting the vehicle body position VP and the guide point IP passes through the off-limits area BE, perform a redefining process for the guide point IP.

The work assistance device 30 according to item 7 makes it possible to eliminate or reduce the likelihood that the working machine 1 will enter the off-limits area BE.

(Item 8) The work assistance device 30 according to item 3 or 4, wherein the first controller 31 is configured or programmed to acquire a vehicle body position VP of the working machine 1 performing the automatic travel in the agricultural field H, and, if an abnormality occurs in the working machine 1, perform a redefining process for the guide point IP.

With the work assistance device 30 according to item 8, it is possible to guide the working machine 1 to an appropriate guide point IP if an abnormality occurs in the working machine 1.

(Item 9) The work assistance device 30 according to any one of items 6 to 8, wherein the first controller 31 is configured or programmed to, in performing the redefining process, command the input interface 32 to receive re-input of a user-specified guide point IP, and perform the redefining process based on the guide point IP thus received by the input interface 32.

The work assistance device 30 according to item 9 allows the user to appropriately re-specify a guide point IP.

(Item 10) The work assistance device 30 according to item 8, wherein the first controller 30 is configured or programmed to, in performing the redefining process, define a new guide point IP instead of the guide point IP received by the input interface 32, the new guide point IP being a position that is within the agricultural field H in which the working machine 1 performs work and that is near a contour OL of the agricultural field H, a travel distance and/or a travel time from the vehicle body position VP at a time of occurrence of the abnormality to the position being the shortest, and redefine guide information based on the new guide point IP.

The work assistance device 30 according to item 10 makes it possible to more reliably eliminate or reduce the likelihood that the working machine 1 will travel a relatively long distance with an abnormality occurring therein.

(Item 11) The work assistance device 30 according to item 1, wherein the input interface 32 is operable to receive input of a user-specified portion of a contour OL of the agricultural field H in which the working machine 1 performs work, and the first controller 31 is configured or programmed to acquire a vehicle body position VP of the working machine 1 performing the automatic travel in the agricultural field H and, upon determining that the working machine 1 has completed work in the agricultural field H, define, as the guide point IP, a position closer to the portion of the contour OL received by the input interface 32, a travel distance and/or a travel time from the vehicle body position VP at a time of completion of work by the working machine 1 to the position being the shortest.

With the work assistance device 30 according to item 11, when the user moves the working machine 1 that has completed work from the agricultural field H, the user is able to appropriately move the working machine 1 manually without relying on the automatic travel.

(Item 12) The work assistance device 30 according to item 1, wherein the input interface 32 is operable to receive input of a user-specified portion of a contour OL of the agricultural field H in which the working machine 1 performs work, and the first controller 31 is configured or programmed to acquire a vehicle body position VP of the working machine 1 performing the automatic travel in the agricultural field H and, if an abnormality occurs in the working machine 1, define, as the guide point IP, a position close to the portion of the contour OL received by the input interface 32, a travel distance and/or a travel time from the vehicle body position VP at a time of occurrence of the abnormality to the position being the shortest.

The work assistance device 30 according to item 12 makes it possible to eliminate or reduce the likelihood that the working machine 1 will continue working with an abnormality occurring therein.

(Item 13) The work assistance device 30 according to any one of items 1 to 12, wherein the first controller 31 is configured or programmed to acquire a vehicle body position VP of the working machine 1 performing the automatic travel in the agricultural field H, generate a guide route R2 to be automatically traveled by the working machine 1 based on the vehicle body position VP and the position information and the orientation information about the guide point IP, and define the guide route R2 as the guide information.

The work assistance device 30 according to item 13 allows the working machine 1 to move to an appropriate position in an appropriate direction by automatically traveling along the guide route R2.

(Item 14) The work assistance device 30 according to item 13, wherein the first controller 31 is configured or programmed to generate, based on the vehicle body position VP and the position information and the orientation information about the guide point IP, at least one of (i) a first guide route R2a generated such that a travel distance from the vehicle body position VP to the guide point IP is as short as possible or (ii) a second guide route R2b generated such that a travel time from the vehicle body position VP to the guide point IP is as short as possible, and define, as the guide information, one (guide route R2a or R2b) of the first guide route R2a and the second guide route R2b that is selected via the input interface 32.

With the work assistance device 30 according to item 14, the user can freely select either the first guide route R2a which prioritizes travel distance or the second guide route R2b which prioritizes travel time by operating the input interface 32. This makes it possible to improve the versatility of the work assistance device 30.

(Item 15) The work assistance device 30 according to any one of items 1 to 14, wherein the input interface 32 is operable to receive input of a user-specified orientation of the working machine 1 at the guide point IP relative to an edge of the agricultural field H, and the first controller 31 is configured or programmed to define the orientation information based on the orientation received by the input interface 32.

The work assistance device 30 according to item 15 enables the user to freely select an orientation of the working machine 1 relative to the edge. This enables the working machine 1 to face in an appropriate direction intended by the user when at the guide point IP.

(Item 16) The work assistance device 30 according to any one of items 1 to 14, wherein the first controller 31 is configured or programmed to define the orientation information such that an entrance/exit 10a of the working machine 1 faces toward an edge of the agricultural field H.

The work assistance device 30 according to item 16 makes it possible to eliminate or reduce the likelihood that the user will step on the ground in the agricultural field H when entering or exiting the working machine 1 at the guide point IP.

(Item 17) The work assistance device 30 according to any one of items 1 to 14, wherein the first controller 31 is configured or programmed to define, based on a position of a working device 2 attached to a vehicle body 3 of the working machine 1 in an offset manner along a width direction relative to the vehicle body 3, the orientation information such that an opposite side of the vehicle body 3 from a side to which the working device 2 is offset relative to the vehicle body 3 faces toward an edge of the agricultural field H.

The work assistance device 30 according to item 17 makes it possible to eliminate or reduce the likelihood that the user will step on the ground in the agricultural field H when, for example, performing maintenance on the working machine 1 at the guide point IP or entering or exiting the working machine 1.

(Item 18) The work assistance device 30 according to any one of items 1 to 14, wherein the first controller 31 is configured or programmed to define the orientation information such that a direction of travel of the working machine 1 is oriented toward an entrance/exit EX of the agricultural field H.

The work assistance device 30 according to item 18 enables the working machine 1 at the guide point IP to easily leave the agricultural field H without having to make a multi-point turn, thus making it possible to prevent or reduce damage to the agricultural field H.

(Item 19) The work assistance device 30 according to any one of items 1 to 14, wherein the first controller 31 is configured or programmed to define the orientation information such that a supply portion 11 is directed toward an edge of the agricultural field H, the supply portion 11 being provided on the working machine 1 to receive a supply from an external source.

With the work assistance device 30 according to item 19, the working machine 1 at the guide point IP can be easily supplied with fuel, materials, and/or the like. It is also possible to eliminate or reduce the likelihood that the user will step on the ground in the agricultural field H when supplying fuel, materials, and/or the like.

(Item 20) A working machine 1 including the work assistance device 30 according to any one of items 1 to 19, and a second controller 20 configured or programmed to control the automatic travel, wherein the first controller 31 is configured or programmed to output the guide information to the second controller 20.

With the working machine 1 according to item 20, it is possible to provide a working machine 1 which achieves the above-described advantageous effect(s).

(Item 21) A work assisting method for a working machine 1 which includes a work assistance device 30 including an input interface 32 to receive input of user-specified information and a first controller 31 configured or programmed to acquire the information received by the input interface 32 and information relating to an agricultural field H in which work is performed, and a second controller 20 configured or programmed to control automatic travel, the work assisting method including causing the first controller 31 to acquire information, causing the first controller 31 to define, based on the acquired information, guide information including (i) position information of a guide point IP for the working machine 1 to be guided from an automatic travel route R1 to a predetermined position, the automatic travel route R1 being a route to be automatically traveled by the working machine 1 in the agricultural field H, and (ii) orientation information indicating an orientation of the working machine 1 at the guide point IP, and causing the first controller 31 to output the guide information to the second controller 20.

The work assisting method according to the item 21 makes it possible not only to move the working machine 1 that is performing the automatic travel or the working machine 1 that has performed the automatic travel to a desired position but also to direct such a working machine 1 in a desired orientation. This allows the user to take appropriate actions relating to the working machine 1.

While example embodiments of the present invention have been described above, it is to be understood that variations and modifications will be apparent to those skilled in the art without departing from the scope and spirit of the present invention. The scope of the present invention, therefore, is to be determined solely by the following claims. For example, in the above-described first to third embodiments, after the route generator 31a generates the automatic travel route R1, the information definer 31b defines the position information and orientation information about the guide point IP. Note, however, that the following configuration may be used. That is, if the position information and/or the orientation information about the guide point IP is/are defined before the automatic travel, these pieces of information are defined before the route generator 31a generates the automatic travel route R1.

## Claims

1. A work assistance device (30) comprising:
an input interface (32) to receive input of user-specified information; and
a first controller (31) configured or programmed to acquire the information received by the input interface (32) and information relating to an agricultural field (H) in which a working machine (1) performs work, the working machine (1) being operable to perform automatic travel; wherein
the first controller (31) is configured or programmed to:
define, based on the acquired information, guide information including (i) position information of a guide point (IP) for the working machine (1) to be guided from an automatic travel route (R1) to a predetermined position, the automatic travel route (R1) being a route to be automatically traveled by the working machine (1) in the agricultural field (H) and (ii) orientation information indicating an orientation of the working machine (1) at the guide point (IP); and
output the guide information to the working machine (1).

2. The work assistance device (30) according to claim 1, wherein the position information of the guide point (IP) is information based on which the working machine (1) is to be guided to a position different from points on the automatic travel route (R1).

3. The work assistance device (30) according to claim 1 or 2, wherein the input interface (32) is operable to receive input of a user-specified position of the guide point (IP).

4. The work assistance device (30) according to claim 3, wherein the input interface (32) is operable to receive input of, as the guide point (IP), a user-specified position that is within the agricultural field (H) in which the working machine (1) performs work and that is in a vicinity of a contour (OL) of the agricultural field (H).

5. The work assistance device (30) according to claim 3 or 4, wherein the first controller (31) is configured or programmed to acquire an off-limits area (BE) of the agricultural field (H), the off-limits area (BE) being an area where the working machine (1) is prohibited from traveling, and, when the input interface (32) is to receive the user-specified position of the guide point (IP), cause the input interface (32) to display whether the input interface (32) is allowed to receive the user-specified position of the guide point (IP) based on the off-limits area (BE).

6. The work assistance device (30) according to claim 3 or 4, wherein the first controller (31) is configured or programmed to:
acquire an off-limits area (BE) of the agricultural field (H), the off-limits area (BE) being an area where the working machine (1) is prohibited from traveling; and
when the guide point (IP) received by the input interface (32) is located in the off-limits area (BE), perform a redefining process for the guide point (IP).

7. The work assistance device (30) according to claim 3 or 4, wherein the first controller (31) is configured or programmed to:
acquire an off-limits area (BE) of the agricultural field (H), the off-limits area (BE) being an area where the working machine (1) is prohibited from traveling;
acquire a vehicle body position (VP) of the working machine (1) performing the automatic travel in the agricultural field (H); and
if each of one or more routes connecting the vehicle body position (VP) and the guide point (IP) passes through the off-limits area (BE), perform a redefining process for the guide point (IP).

8. The work assistance device (30) according to claim 3 or 4, wherein the first controller (31) is configured or programmed to:
acquire a vehicle body position (VP) of the working machine (1) performing the automatic travel in the agricultural field (H); and
if an abnormality occurs in the working machine (1), perform a redefining process for the guide point (IP).

9. The work assistance device (30) according to any one of claims 6 to 8, wherein the first controller (31) is configured or programmed to, in performing the redefining process, command the input interface (32) to receive re-input of a user-specified guide point (IP) and perform the redefining process based on the guide point (IP) thus received by the input interface (32).

10. The work assistance device (30) according to claim 8, wherein the first controller (30) is configured or programmed to:
in performing the redefining process, define a new guide point (IP) instead of the guide point (IP) received by the input interface (32), the new guide point (IP) being a position that is within the agricultural field (H) in which the working machine (1) performs work and that is near a contour (OL) of the agricultural field (H), a travel distance and/or a travel time from the vehicle body position (VP) at a time of occurrence of the abnormality to the position being the shortest; and
redefine guide information based on the new guide point (IP).

11. The work assistance device (30) according to claim 1, wherein
the input interface (32) is operable to receive input of a user-specified portion of a contour (OL) of the agricultural field (H) in which the working machine (1) performs work; and
the first controller (31) is configured or programmed to acquire a vehicle body position (VP) of the working machine (1) performing the automatic travel in the agricultural field (H) and, upon determining that the working machine (1) has completed work in the agricultural field (H), define, as the guide point (IP), a position close to the portion of the contour (OL) received by the input interface (32), a travel distance and/or a travel time from the vehicle body position (VP) at a time of completion of work by the working machine (1) to the position being the shortest.

12. The work assistance device (30) according to claim 1, wherein
the input interface (32) is operable to receive input of a user-specified portion of a contour (OL) of the agricultural field (H) in which the working machine (1) performs work; and
the first controller (31) is configured or programmed to acquire a vehicle body position (VP) of the working machine (1) performing the automatic travel in the agricultural field (H), and, if an abnormality occurs in the working machine (1), define, as the guide point (IP), a position close to the portion of the contour (OL) received by the input interface (32), a travel distance and/or a travel time from the vehicle body position (VP) at a time of occurrence of the abnormality to the position being the shortest.

13. The work assistance device (30) according to any one of claims 1 to 12, wherein the first controller (31) is configured or programmed to:
acquire a vehicle body position (VP) of the working machine (1) performing the automatic travel in the agricultural field (H);
generate a guide route (R2) to be automatically traveled by the working machine (1) based on the vehicle body position (VP) and the position information and the orientation information about the guide point (IP); and
define the guide route (R2) as the guide information.

14. The work assistance device (30) according to claim 13, wherein the first controller (31) is configured or programmed to:
generate, based on the vehicle body position (VP) and the position information and the orientation information about the guide point (IP), at least one of (i) a first guide route (R2a) generated such that a travel distance from the vehicle body position (VP) to the guide point (IP) is as short as possible or (ii) a second guide route (R2b) generated such that a travel time from the vehicle body position (VP) to the guide point (IP) is as short as possible; and
define, as the guide information, one (R2a, R2b) of the first guide route (R2a) and the second guide route (R2b) that is selected via the input interface (32).

15. The work assistance device (30) according to any one of claims 1 to 14, wherein
the input interface (32) is operable to receive input of a user-specified orientation of the working machine (1) at the guide point (IP) relative to an edge of the agricultural field (H); and
the first controller (31) is configured or programmed to define the orientation information based on the orientation received by the input interface (32).

16. The work assistance device (30) according to any one of claims 1 to 14, wherein the first controller (31) is configured or programmed to define the orientation information such that an entrance/exit (10a) of the working machine (1) faces toward an edge of the agricultural field (H).

17. The work assistance device (30) according to any one of claims 1 to 14, wherein the first controller (31) is configured or programmed to define, based on a position of a working device (2) attached to a vehicle body (3) of the working machine (1) in an offset manner along a width direction relative to the vehicle body (3), the orientation information such that an opposite side of the vehicle body (3) from a side to which the working device (2) is offset relative to the vehicle body (3) faces toward an edge of the agricultural field (H).

18. The work assistance device (30) according to any one of claims 1 to 14, wherein the first controller (31) is configured or programmed to define the orientation information such that a direction of travel of the working machine (1) is oriented toward an entrance/exit (EX) of the agricultural field (H).

19. The work assistance device (30) according to any one of claims 1 to 14, wherein the first controller (31) is configured or programmed to define the orientation information such that a supply portion (11) is directed toward an edge of the agricultural field (H), the supply portion (11) being provided on the working machine (1) to receive a supply from an external source.

20. A working machine (1) comprising:
the work assistance device (30) according to any one of claims 1 to 19; and
a second controller (20) configured or programmed to control the automatic travel; wherein
the first controller (31) is configured or programmed to output the guide information to the second controller (20).

21. A work assisting method for a working machine (1) which includes:
a work assistance device (30) including an input interface (32) to receive input of user-specified information and a first controller (31) configured or programmed to acquire the information received by the input interface (32) and information relating to an agricultural field (H) in which work is performed; and
a second controller (20) configured or programmed to control automatic travel;
the work assisting method comprising:
causing the first controller (31) to acquire information;
causing the first controller (31) to define, based on the acquired information, guide information including (i) position information of a guide point (IP) for the working machine (1) to be guided from an automatic travel route (R1) to a predetermined position, the automatic travel route (R1) being a route to be automatically traveled by the working machine (1) in the agricultural field (H), and (ii) orientation information indicating an orientation of the working machine (1) at the guide point (IP); and
causing the first controller (31) to output the guide information to the second controller (20).
